# EUROPEAN PATENT APPLICATION

(11) **EP 4 564 148 A1**
(43) Date of publication of application: **04.06.2025**
(21) Application number: 23909865.0
(22) Date of filing: 27.11.2023
(51) Int. Cl.: G06F 3/04817, G06F 9/445, G06F 3/0484

(54) **MULTI-WINDOW PRESENTATION METHOD FOR APPLICATION PROGRAMS, AND ELECTRONIC DEVICE**

(30) Priority: 28.12.2022 CN 202211702447
(71) Applicant: Huawei Technologies Co., Ltd., Shenzhen, Guangdong 518129 (CN)
(72) Inventor: ZHANG, Yanan, Shenzhen, Guangdong 518129 (CN); WANG, Hongjun, Shenzhen, Guangdong 518129 (CN); YANG, Zhiyan, Shenzhen, Guangdong 518129 (CN)
(74) Representative: Thun, Clemens
(86) International application number: PCT/CN2023/134451
(87) International publication number: WO 2024/139934

(57) **Abstract**

This application provides an application multi-window presentation method and an electronic device. The method includes: displaying a first interface of a first application in response to a first operation; displaying one or more first multi-window entries in a floating manner based on the first application and/or the first interface, where the one or more first multi-window entries include a target multi-window entry, and the target multi-window entry indicates a second interface of a second application; and displaying a multi-window interface in response to a second operation on the target multi-window entry, where the multi-window interface includes the first interface of the first application and the second interface of the second application. Therefore, the multi-window interface can be directly recommended to a user by using the multi-window entry, so that the user can quickly find an application that the user is interested in and/or a user interface of the application. This increases application usage, and provides the user with a direct service applicable to a current scenario.

## Description

This application claims priority to Chinese Patent Application No. 202211702447.4, filed with the China National Intellectual Property Administration on December 28, 2022 and entitled "APPLICATION MULTI-WINDOW PRESENTATION METHOD AND ELECTRONIC DEVICE", which is incorporated herein by reference in its entirety.

### TECHNICAL FIELD

This application relates to the field of terminal technologies, and in particular, to an application multi-window presentation method and an electronic device.

### BACKGROUND

With continuous development of large-screen technologies, users spend increasingly long time in learning and working by using electronic devices such as mobile phones, foldable screens, or tablet computers. However, applications are presented in a single and fixed manner, and in particular, related applications cannot be recommended. Therefore, how to flexibly present an application is a problem that needs to be urgently resolved.

### SUMMARY

This application provides an application multi-window presentation method and an electronic device, so that an application and/or a user interface of the application can be presented by using a multi-window entry.

According to a first aspect, this application provides an application multi-window presentation method, and the method includes:
displaying a first interface of a first application in response to a first operation;
displaying one or more first multi-window entries in a floating manner based on the first application and/or the first interface, where the one or more first multi-window entries include a target multi-window entry, and the target multi-window entry indicates a second interface of a second application; and
displaying a multi-window interface in response to a second operation on the target multi-window entry, where the multi-window interface includes the first interface of the first application and the second interface of the second application.

According to the method provided in the first aspect, after receiving the first operation of a user, an electronic device may display the first interface of the first application. The electronic device may display the one or more first multi-window entries in the floating manner based on the first application and/or the first interface, and can recommend, to the user in time by using the one or more first multi-window entries, an application related to the first application and/or the first interface and/or a user interface of the application.

The first application may be various types of applications in the electronic device, and the first interface is any user interface of the first application. The one or more first multi-window entries may be displayed on the first interface in the floating manner when the first interface is displayed, or may be displayed on the first interface in the floating manner after the first interface is displayed. The application mentioned in this application is an application program.

After receiving the second operation of the user on the target multi-window entry in the one or more first multi-window entries, the electronic device may display a multi-window interface including the first interface of the first application and the second interface of the second application, so that an application that the user is interested in and/or a user interface of the application can be quickly presented to the user.

The second application may be various types of applications in the electronic device, and the second interface is any user interface of the second application. The first application and the second application may be the same or different. The first interface and the second interface may be the same or different.

Therefore, the multi-window interface can be directly recommended to the user by using the multi-window entry, so that the user can quickly find the application that the user is interested in and/or the user interface of the application. This increases application usage, and provides the user with a direct service applicable to a current scenario.

In a possible design, the method further includes:
displaying a third interface of a third application in response to a third operation, where the third application is different from the first application; and
displaying one or more second multi-window entries in a floating manner based on the third application, where the one or more second multi-window entries are different from the one or more first multi-window entries.

In this way, after receiving the third operation of the user, the electronic device may display the third interface of the third application. The electronic device may display the one or more second multi-window entries in the floating manner based on the third application, and can recommend, to the user in time by using the one or more second multi-window entries, an application related to the third application and/or a user interface of the application.

The third application may be various types of applications in the electronic device, and the third interface is any user interface of the third application.

When the third application is different from the first application, the one or more second multi-window entries are different from the one or more first multi-window entries. It can be learned that different applications correspond to different multi-window entries. In this way, the multi-window entry is related to the application. This helps increase diversity of the multi-window entry. Certainly, a same multi-window entry may also exist. This is not limited in this application.

In a possible design, the method further includes:
displaying a fourth interface of the first application in response to a fourth operation, where the fourth interface is different from the first interface; and
displaying one or more third multi-window entries in a floating manner based on the fourth interface, where the one or more third multi-window entries are different from the one or more first multi-window entries.

In this way, after receiving the fourth operation of the user, the electronic device may display the fourth interface of the first application. The electronic device may display the one or more third multi-window entries in the floating manner based on the fourth interface, and can recommend, to the user in time by using the one or more third multi-window entries, an application related to the fourth interface and/or a user interface of the application.

The fourth interface is any user interface of the first application.

When the fourth interface is different from the first interface, the one or more third multi-window entries are different from the one or more first multi-window entries. It can be learned that different user interfaces in a same application correspond to different multi-window entries. In this way, the multi-window entry is related to the user interface of the application. This helps enrich the multi-window entry. Certainly, a same multi-window entry may also exist. This is not limited in this application.

In a possible implementation, the displaying a multi-window interface in response to a second operation on the target multi-window entry includes:
after the target multi-window entry is selected, displaying the multi-window interface in response to a mechanical operation of bending an electronic device; or
after the target multi-window entry is selected, displaying the multi-window interface in response to a mechanical operation of pressing a hardware button on an electronic device; or
displaying the multi-window interface in response to a screen touch operation of selecting the target multi-window entry.

Therefore, the electronic device provides a plurality of feasible implementations for displaying the multi-window interface, to facilitate a user operation and help improve user experience.

In a possible design, after the displaying the multi-window interface, the method further includes:
updating an interface of an application on the multi-window interface in response to a fifth operation.

Therefore, after receiving the fifth operation of the user, the electronic device may update an interface of the first application on the multi-window interface, and/or may update an interface of the second application on the multi-window interface. Therefore, an application and/or a user interface of the application can be updated on the multi-window interface, so that the user can conveniently and quickly obtain service content that the user wants to obtain. This helps improve user experience.

In a possible design, after the displaying the multi-window interface, the method further includes:
displaying a first control on the multi-window interface, where the first control triggers saving of the multi-window interface; and

in response to a sixth operation on the first control, adding the target multi-window entry to a fifth interface of a fourth application, and/or adding the target multi-window entry to a sixth interface of an application corresponding to the multi-window interface.

Therefore, the electronic device may perform saving processing on the multi-window interface by using a control. Therefore, the electronic device may add, to the fifth interface of the fourth application, a multi-window entry corresponding to the multi-window interface, so that the user can conveniently and quickly view the multi-window interface by using the multi-window entry; and/or the electronic device may add a corresponding multi-window entry to a user interface of an application corresponding to the multi-window interface, so that the user can conveniently and quickly view the multi-window interface by using the multi-window entry.

In addition, on a multi-window interface other than the foregoing multi-window interface, after storing the another multi-window interface, the electronic device may add, in the foregoing manner, a multi-window entry corresponding to the multi-window interface, or may replace the target multi-window entry with the multi-window entry corresponding to the multi-window interface. This is not limited in this application.

In a possible design, the method further includes:
displaying, on the fifth interface of the fourth application, application information of the application corresponding to the multi-window interface; and
displaying, in response to a seventh operation on the application information of the application corresponding to the multi-window interface, a sixth interface of the application corresponding to the multi-window interface, where the sixth interface of the application corresponding to the multi-window interface includes the target multi-window entry.

Therefore, the electronic device may display, on the fifth interface of the fourth application, at least one piece of application information of an application, for example, an icon, a name, a picture, and a function option. After receiving the seventh operation triggered by the user for the application information of the application, the electronic device may display the sixth interface that is of the application and that includes the multi-window entry, so that the user can view the corresponding multi-window interface by using the multi-window entry. This helps the user quickly obtain service content that the user wants to obtain, in addition, the foregoing function is integrated into a channel for triggering the application information of the application, to facilitate use of the user and help improve user experience.

In a possible design, the fourth application includes any application on a home screen, a leftmost screen, a control center, or a notification center. The fourth application may be various types of applications in the electronic device. This helps enrich channels for multi-window entry presentation and multi-window entry recommendation.

In a possible design, the method further includes:
in response to an eighth operation, performing any one of entry deleting, entry updating, entry replacing, entry viewing, entry adding, entry location moving, all-entry expanding, entry hiding, entry display region enlarging, or entry display region reducing on the one or more first multi-window entries.

Therefore, the electronic device provides various editing operations for the multi-window entry, so that the user can flexibly use the multi-window entry, and various use requirements of the user are met.

In a possible design, the method further includes:
skipping displaying the one or more first multi-window entries after no operation of a user is received after first duration.

A specific value of the first duration is not limited in this application.

Therefore, after receiving no operation like a screen touch operation and/or a mechanical operation of the user within a period of time, the electronic device may not continue to display the one or more multi-window entries, and can adaptively stop presenting an application in the multi-window entry to the user. This is convenient for the user to view the first interface of the first application.

In a possible design, the one or more first multi-window entries are located at a side edge and/or a bottom of the first interface of the first application.

Therefore, when clearly displaying the first interface of the first application, the electronic device may further clearly present the one or more first multi-window entries.

In a possible design, when a plurality of multi-window entries include a first entry and a second entry, and a display priority of the first entry is higher than a display priority of the second entry, a display region of the first entry is closer to a screen touch region for the user than a display region of the second entry.

Therefore, the electronic device may preset a display priority of each multi-window entry. Therefore, when the electronic device needs to present a plurality of multi-window entries, the electronic device may sort the multi-window entries based on display priorities of the multi-window entries. The electronic device sequentially sets the multi-window entries in corresponding display regions in the foregoing sorting sequence, so that a multi-window entry with a higher display priority is closer to the screen touch region for the user than a multi-window entry with a lower display priority. In this way, it is easier for the user to see and touch the multi-window entry with the higher display priority.

For example, when the plurality of multi-window entries are sequentially presented in a horizontal direction, a multi-window entry with a higher display priority is located at a left side of a multi-window entry with a lower display priority. When the plurality of multi-window entries are sequentially presented in a vertical direction, a multi-window entry with a higher display priority is located above a multi-window entry with a lower display priority.

Certainly, a multi-window entry with a higher display priority may alternatively be located in a middle region of a screen of the electronic device, and a multi-window entry with a lower display priority may be located in an edge region of the screen of the electronic device.

In a possible design, a source of the multi-window entry includes at least one of the following:
a user-predefined multi-window entry; or
a multi-window entry that is previously recommended N times, where N is a positive integer; or
a historically saved multi-window entry; or
a multi-window entry that has been used M consecutive times, where M is a positive integer; or
a multi-window entry used within preset duration; or
a multi-window entry including a plurality of instances in a same application based on a current location and/or current time of the electronic device.

Therefore, when the electronic device needs to display the multi-window entry, the electronic device may obtain the multi-window entry from the foregoing sources, to enrich diversity of the multi-window entry.

In a possible design, a display form of the multi-window entry includes at least one of a control, a floating bubble, or a card. Therefore, a plurality of possibilities are provided for the display form of the multi-window entry, and the display form of the multi-window entry is enriched.

In a possible design, display content of the multi-window entry includes at least one of an application interface photo, an application icon, an application name, or a preset pattern. Therefore, a plurality of possibilities are provided for display content of the multi-window entry, and the display content of the multi-window entry is enriched.

In a possible design, a display manner of the multi-window interface is related to a display manner of the target multi-window entry and/or a presentation status of the electronic device. Therefore, the electronic device may display the multi-window interface in any one of a split-screen display manner, a floating display manner, and a full-screen display manner based on the display manner of the multi-window entry and/or the presentation status of the electronic device.

In a possible design, the display manner of the multi-window interface is consistent with the display manner of the target multi-window entry.

According to a second aspect, this application provides an application multi-window presentation method, and the method includes:
displaying one or more multi-window entries on a first interface of a first application, where the one or more first multi-window entries include a target multi-window entry, and the target multi-window entry indicates a second application and a third application; and
displaying a multi-window interface in response to a first operation on the target multi-window entry, where the multi-window interface includes a second interface of the second application and a third interface of the third application.

According to the method in the second aspect, the electronic device may display the one or more multi-window entries on the first interface of the first application, and can recommend an application and/or a user interface of the application to a user in time through the one or more multi-window entries, for example, the second application and the third application.

The first application may be various types of applications in the electronic device, and the first interface is any user interface of the first application. The second application may be various types of applications in the electronic device. The third application may be various types of applications in the electronic device. The first application is different from both the second application and the third application. The second application and the third application may be the same or different.

After receiving the first operation of the user on the target multi-window entry in the one or more multi-window entries, the electronic device may display a multi-window interface including the second interface of the second application and the third interface of the third application, so that an application that the user is interested in and/or a user interface of the application can be quickly presented to the user.

The second interface is any user interface of the second application. The third interface is any user interface of the third application.

Therefore, the multi-window interface can be directly recommended to the user by using the multi-window entry, so that the user can quickly find the application that the user is interested in and/or the user interface of the application. This increases application usage, and provides the user with a direct service applicable to a current scenario.

In a possible design, when a display region of the target multi-window entry includes a first region, a second region, and a third region at different locations, the method further includes:
displaying a first editing interface in a floating manner based on the second application in response to a second operation on the first region, where the first editing interface includes a plurality of first options, and the plurality of first options indicate different interfaces of the second application and a fourth application, or
displaying a second editing interface in a floating manner based on the third application in response to a third operation on the second region, where the second editing interface includes a plurality of second options, and the plurality of second options indicate different interfaces of the third application and a fifth application, or
displaying a third editing interface in a floating manner based on the second application and/or the third application in response to a fourth operation on the third region, where the third editing interface includes a plurality of third options, and the plurality of third options indicate different interfaces of the second application and the third application.

The first editing interface is any user interface of the first application. The fourth application may be various types of applications in the electronic device. The fourth application and the third application may be the same or different. The second editing interface is any user interface of the first application. The fifth application may be various types of applications in the electronic device. The fifth application and the second application may be the same or different. The third editing interface is any user interface of the first application.

A user interface on the first editing interface focuses on the second application, a user interface on the second editing interface focuses on the third application, and a user interface on the third editing interface focuses on both the second application and the third application. It can be learned that user interfaces on the first editing interface, the second editing interface, and the third editing interface focus on different recommended applications.

Therefore, after receiving a screen touch operation of the user on a location in the display region of the target multi-window entry, the electronic device may display an editing interface of an application corresponding to the location, and can recommend more user interfaces of the application and/or another application related to the application to the user. This facilitates replacement or exchange for the user.

It can be learned that the editing interface is related to an application corresponding to a trigger location. In other words, different trigger locations correspond to different editing interfaces.

To facilitate an operation of the user, the target multi-window entry is used as an example. The electronic device may display the target multi-window entry on the first interface of the first application by using application information of the second application, application information of the third application, and the like. In this way, when the user wants to view the first editing interface corresponding to the second application, the user may trigger the application information of the second application. When the user wants to view the second editing interface corresponding to the third application, the user may trigger the application information of the third application. When the user wants to view the third editing interface corresponding to the second application and the third application, the user may trigger a region other than the application information of the second application and the application information of the third application.

In addition, in addition to indicating the user interfaces of the two applications, an option on the editing interface may further indicate an application, may further indicate a user interface of the application, may further indicate respective user interfaces of three applications, or the like. The foregoing channel may come from, for example, a source of each multi-window entry, an application installed on the electronic device, another application that has an association relationship with an application related to the editing interface, and the like.

In a possible design, the method further includes:
selecting, in response to a fifth operation on an editing interface, a target interface indicated by an option on the editing interface; and
updating the target multi-window entry in response to a sixth operation of triggering exit of the editing interface, where an updated target multi-window entry indicates an application corresponding to the target interface.

Therefore, after receiving the fifth operation performed by the user on the editing interface, the electronic device may select, from the editing interface, the target interface indicated by the option. After receiving the sixth operation of the user of triggering exit of the editing interface, the electronic device may update the target multi-window entry from indicating the second application and the third application to indicating an application corresponding to the target interface. Therefore, an application and/or a user interface of the application can be updated on the editing interface, so that the user can conveniently and quickly obtain service content that the user wants to obtain. This helps improve user experience.

In addition, the electronic device may further change display content of the target multi-window entry based on different applications indicated by the target multi-window entry.

In a possible design, the method further includes:
in response to a seventh operation, performing any one of option deleting, option updating, option replacing, option viewing, option adding, option location moving, all-option expanding, option hiding, option display region enlarging, or option display region reducing on a plurality of options on the editing interface.

Therefore, the electronic device provides various editing operations for options on the editing interface, so that the user can flexibly operate the options on the editing interface, and various use requirements of the user are met.

In a possible design, the method further includes:
skipping displaying the editing interface after no operation of a user is received after second duration.

A specific value of the second duration is not limited in this application.

Therefore, after receiving no operation like a screen touch operation and/or a mechanical operation of the user within a period of time, the electronic device may not continue to display the editing interface, and can adaptively stop presenting the editing interface to the user.

In a possible design, when the plurality of options on the editing interface include a first option and a second option, and a display priority of the first option is higher than a display priority of the second option, a display region of the first option is closer to a screen touch region for the user than a display region of the second option.

Therefore, the electronic device may preset a display priority of each option. Therefore, when the electronic device needs to present the plurality of options on the editing interface, the electronic device may sort the options based on display priorities of the plurality of options. The electronic device sequentially sets the options in corresponding display regions in the foregoing sorting sequence, so that an option with a higher display priority is closer to the screen touch region for the user than an option with a lower display priority. In this way, it is easier for the user to see and touch the option with the higher display priority.

For example, when the plurality of options are sequentially presented in a horizontal direction, an option with a higher display priority is located at a left side of an option with a lower display priority. When the plurality of options are sequentially presented in a vertical direction, an option with a higher display priority is located above an option with a lower display priority.

Certainly, an option with a higher display priority may alternatively be located in a middle region of a screen of the electronic device, and an option with a lower display priority may be located in an edge region of the screen of the electronic device.

In a possible design, after the displaying the multi-window interface, the method further includes:
updating an interface of an application on the multi-window interface in response to an eighth operation; and
updating the target multi-window entry in response to a ninth operation of triggering exit of an updated multi-window interface, where an updated target multi-window entry indicates an application corresponding to the updated multi-window interface.

Therefore, after receiving the eighth operation of the user, the electronic device may update an interface of the second application on the multi-window interface, and/or may update an interface of the third application on the multi-window interface. After receiving the ninth operation of the user of triggering exit of the updated multi-window interface, the electronic device may update the target multi-window entry from indicating the second application and the third application to indicating an application corresponding to the updated multi-window interface. Therefore, an application and/or a user interface of the application can be updated on the multi-window interface, so that the user can conveniently and quickly obtain service content that the user wants to obtain. This helps improve user experience.

In addition, the electronic device may further change display content of the target multi-window entry based on different applications indicated by the target multi-window entry.

In a possible design, the method further includes:
deleting the target multi-window entry from the first interface of the first application in response to a tenth operation on the target multi-window entry.

Therefore, after receiving the tenth operation of the user on the target multi-window entry, the electronic device may delete the target multi-window entry from the first interface of the first application. In this way, it is convenient for the user to delete the multi-window entry.

In a possible design, a display form of the multi-window entry includes at least one of a control, a floating bubble, or a card. Therefore, a plurality of possibilities are provided for the display form of the multi-window entry, and the display form of the multi-window entry is enriched.

In a possible design, display content of the multi-window entry includes at least one of an application interface photo, an application icon, an application name, or a preset pattern. Therefore, a plurality of possibilities are provided for display content of the multi-window entry, and the display content of the multi-window entry is enriched.

In a possible design, a display manner of the multi-window interface is related to a display manner of the target multi-window entry and/or a presentation status of the electronic device. Therefore, the electronic device may display the multi-window interface in any one of a split-screen display manner, a floating display manner, and a full-screen display manner based on the display manner of the multi-window entry and/or the presentation status of the electronic device.

In a possible design, the display manner of the multi-window interface is consistent with the display manner of the target multi-window entry.

In a possible design, the first application includes any application on a home screen, a leftmost screen, a control center, or a notification center. This helps enrich channels for multi-window entry presentation and multi-window entry recommendation.

According to a third aspect, this application provides an application multi-window presentation method, and the method includes:
displaying application information of a second application on a first interface of a first application,
displaying one or more first multi-window entries in a floating manner in response to a first operation on the application information of the second application, where the one or more first multi-window entries include a target multi-window entry, and the target multi-window entry indicates a third interface of a third application; and
displaying a multi-window interface in response to a second operation on the target multi-window entry, where the multi-window interface includes a second interface of the second application and the third interface of the third application.

According to the method in the third aspect, the electronic device may display, on the first interface of the first application, at least one piece of application information of the second application, for example, an icon, a name, a picture, and a function option. After receiving the first operation of the user on application information of the second application, the electronic device may display one or more multi-window entries in a floating manner, so that an application related to the second application and/or a user interface of the application can be recommended to the user in time through the one or more multi-window entries, for example, the third interface of the third application.

The first application may be various types of applications in the electronic device, and the first interface is any user interface of the first application. The second application may be various types of applications in the electronic device, and the second interface is any user interface of the first application. The third application may be various types of applications in the electronic device, and the third interface is any user interface of the first application. The first application is different from both the second application and the third application. The second application and the third application may be the same or different.

After receiving the second operation of the user on the target multi-window entry in the one or more multi-window entries, the electronic device may display a multi-window interface including the second interface of the second application and the third interface of the third application, so that an application that the user is interested in and/or a user interface of the application can be quickly presented to the user.

Therefore, the multi-window interface can be directly recommended to the user by using the multi-window entry, so that the user can quickly find the application that the user is interested in and/or the user interface of the application. This increases application usage, and provides the user with a direct service applicable to a current scenario.

In a possible design, after the displaying the multi-window interface, the method further includes:
updating an interface of an application on the multi-window interface in response to a third operation; and
updating the target multi-window entry in response to a fourth operation of triggering exit of an updated multi-window interface, where an updated target multi-window entry indicates an application corresponding to the updated multi-window interface.

Therefore, after receiving the third operation of the user, the electronic device may update an interface of the second application on the multi-window interface, and/or may update an interface of the third application on the multi-window interface. After receiving the fourth operation of the user of triggering exit of the updated multi-window interface, the electronic device may update the target multi-window entry from indicating the second application and the third application to indicating an application corresponding to the updated multi-window interface. Therefore, an application and/or a user interface of the application can be updated on the multi-window interface, so that the user can conveniently and quickly obtain service content that the user wants to obtain. This helps improve user experience.

In addition, the electronic device may further change display content of the target multi-window entry based on different applications indicated by the target multi-window entry.

In a possible design, the method further includes:
in response to a fifth operation, performing any one of entry deleting, entry updating, entry replacing, entry viewing, entry adding, entry location moving, all-entry expanding, entry hiding, entry display region enlarging, or entry display region reducing on the one or more multi-window entries.

Therefore, the electronic device provides various editing operations for the multi-window entry, so that the user can flexibly use the multi-window entry, and various use requirements of the user are met.

In a possible design, the method further includes:
skipping displaying the one or more first multi-window entries after no operation of a user is received after third duration.

A specific value of the third duration is not limited in this application.

Therefore, after receiving no operation like a screen touch operation and/or a mechanical operation of the user within a period of time, the electronic device may not continue to display the one or more multi-window entries, and can adaptively stop presenting an application in the multi-window entry to the user. This is convenient for the user to view the first interface of the first application.

In a possible design, when a plurality of multi-window entries include a first entry and a second entry, and saving time of the first entry is earlier than saving time of the second entry, a display region of the first entry is closer to a screen touch region for the user than a display region of the second entry.

Therefore, the electronic device may pre-record saving time of each multi-window entry. Therefore, when the electronic device needs to present a plurality of multi-window entries, the electronic device may sort the multi-window entries based on saving time of the multi-window entries. The electronic device sequentially sets the multi-window entries in corresponding display regions in the foregoing sorting sequence, so that a multi-window entry with earlier saving time is closer to the screen touch region for the user than a multi-window entry with later saving time. In this way, it is easier for the user to see and touch the multi-window entry with the earlier saving time.

In a possible design, display content of the multi-window entry includes at least one of an application interface photo, an application icon, an application name, or a preset pattern. Therefore, a plurality of possibilities are provided for display content of the multi-window entry, and the display content of the multi-window entry is enriched.

In a possible design, the first application includes any application on a home screen, a leftmost screen, a control center, or a notification center. This helps enrich channels for multi-window entry presentation and multi-window entry recommendation.

According to a fourth aspect, this application provides an electronic device, including a memory and a processor. The memory is configured to store a computer-executable program or instructions, and the processor is configured to invoke the computer-executable program or the instructions in the memory, so that the electronic device performs the method in any one of the first aspect and the possible designs of the first aspect.

According to a fifth aspect, this application provides a chip system. The chip system is used in an electronic device including a memory, a display, and a sensor. The chip system includes a processor. When the processor executes a computer-executable program or instructions stored in the memory, the electronic device implements the method in any one of the first aspect and the possible designs of the first aspect.

According to a sixth aspect, this application provides a computer-readable storage medium. The computer-readable storage medium stores a computer-executable program or instructions. When the computer-executable program or the instructions are executed by a processor, an electronic device implements the method in any one of the first aspect and the possible designs of the first aspect.

According to a seventh aspect, this application provides a computer program product, including execution instructions. The execution instructions are stored in a readable storage medium, and at least one processor of an electronic device may read the execution instructions from the readable storage medium. The at least one processor executes the execution instructions, so that the electronic device implements the method in any one of the first aspect and the possible designs of the first aspect.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3A to FIG. 3R are diagrams of human-computer interaction interfaces according to an embodiment of this application;
FIG. 4A to FIG. 4E are diagrams of human-computer interaction interfaces according to an embodiment of this application;
FIG. 5A to FIG. 5H are diagrams of human-computer interaction interfaces according to an embodiment of this application;
FIG. 6A and FIG. 6B are diagrams of human-computer interaction interfaces according to an embodiment of this application;
FIG. 7 is a flowchart of an application multi-window presentation method according to an embodiment of this application;
FIG. 8 is a flowchart of an application multi-window presentation method according to an embodiment of this application;
FIG. 9 is a flowchart of an application multi-window presentation method according to an embodiment of this application; and
FIG. 10 is a flowchart of an application multi-window presentation method according to an embodiment of this application.

### DESCRIPTION OF EMBODIMENTS

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. A character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may represent: a, b, c, a combination of a and b, a combination of a and c, a combination of b and c, or a combination of a, b, and c, where each of a, b, and c may be in a singular form or a plural form. In addition, terms "first" and "second" are merely used for a purpose of description, and shall not be understood as an indication or implication of relative importance. An orientation or a location relationship indicated by the term such as "center", "vertical", "horizontal", "up", "down", "left", "right", "front", or "back" is based on an orientation or a location relationship shown in the accompanying drawings, and is merely intended to facilitate description of this application and simplify description, but does not indicate or imply that a specified apparatus or element needs to have a specific orientation and be constructed and operated in a specific orientation. Therefore, such terms should not be construed as limitations to this application.

This application provides an application multi-window presentation method and an electronic device, to display a multi-window entry of an application based on recommendation logic of one or more factors of historical user behavior of the application, a current location of the electronic device, or current time of the electronic device. The multi-window entry of the application is triggered, so that a user interface of the application and a user interface of a recommended application may be displayed in a form of multi-window.

In some examples, "the application" is an application that is just started or is being used by a user, and the "recommended application" is an application that may be used by the user, an application that may be used by the user as predicted by a system, or one or more applications other than "the application" displayed in the multi-window entry.

Therefore, a user interface that can be displayed in the form of multi-window is appropriately recommended by using the multi-window entry, so that the user can quickly open, based on an intention of the user by triggering the multi-window entry, the user interface displayed in the form of multi-window. In this way, an application that the user wants to start and/or a user interface of the application can be quickly and conveniently recommended to the user. This enriches interface content of the electronic device during running of the application, flexibly implements recommendation and presentation of the application, and helps improve user experience.

There may be one or more multi-window entries.

Correspondingly, the multi-window entry may use one or more of a card, a control, or a floating bubble.

Display content of the multi-window entry may be one or more of interface photos (for example, pictures or snapshots) of the application and the recommended application, icons of the application and the recommended application, names of the application and the recommended application, or preset patterns.

There may be one or more recommended applications in the multi-window entry.

A quantity and/or types of recommended applications in the multi-window entry may be the same or different.

The recommended application may be the application, or may be an application other than the application, or may be the foregoing two types of applications.

The recommended application may be an application in the electronic device, or may be an application provided by another electronic device that can communicate with the electronic device, or may be the foregoing two types of applications.

The "multi-window display" means that interfaces of one or more applications are displayed in the form of "multi-window." Displaying the user interface of the application and the user interface of the recommended application in the form of multi-window may be understood as presenting the user interface of the application and the user interface of the recommended application in a plurality of windows on a display of the electronic device.

A manner of the multi-window display may be a split-screen manner, a floating-window manner, or a split-screen and floating-window manner. The split-screen manner may include a vertical split-screen manner, a horizontal split-screen manner, a three-split-screen manner, a four-split-screen manner, or the like. The floating-window manner includes a full-screen and floating-window manner, or a floating-window and floating-window manner. The floating window may be in any form of card and/or window (for example, a pop-up window).

In addition, the manner of the multi-window display may be related to one or more of a display manner of the multi-window entry, a display status of the electronic device, a display manner supported by the electronic device, a display manner supported by the application and/or the recommended application, or the like.

The display manner of the multi-window entry may include a split-screen manner, a floating-window manner, a full-screen manner, and the like.

It should be understood that the full-screen manner mentioned in this application may be understood as that the electronic device displays any user interface in an entire display region of the display, or may be understood as that the electronic device displays any user interface in a display region other than a region a in which parameters such as time, a signal, and a battery level are displayed on the display. The region a is usually located at the top of the display. A region for full-screen display may be divided into a region b1 and a region b2, the region b1 and the region b2 do not overlap, and areas of the region b1 and the region b2 may be equal or unequal. A full-screen display manner of split screens may be understood as that the electronic device displays one user interface in the region b1 and displays another user interface in the region b2. In some examples, the region a may be referred to as a status bar.

The display manner of the multi-window entry is related to a source of the multi-window entry. For example, the display manner of the multi-window entry may be consistent with a display manner of the source of the multi-window entry.

The multi-window entry may include a plurality of sources, and the source of the multi-window entry is related to one or more factors of historical user behavior of the application, a current location of the electronic device, or current time of the electronic device.

In some examples, the multi-window entry may be a multi-window entry predefined by the user. For example, the multi-window entry may be predefined by one or more of a manufacturer of the electronic device, a developer of the application, or a user of the electronic device/application.

In some examples, the multi-window entry may be a multi-window entry that is previously recommended N times, where N is a positive integer. The multi-window entry that is previously presented N times is related to historical presentation behavior. The historical presentation behavior may be understood as follows: In previous N times of recommendation before the electronic device displays the user interface of the application and the user interface of the recommended application in the form of multi-window, the electronic device has behavior of recommending one or more multi-window entries.

Therefore, the multi-window entry that is previously recommended N times may be used as a multi-window entry for subsequent recommendation.

In some examples, the multi-window entry may be a historically saved multi-window entry. The historically saved multi-window entry is related to historical saving behavior. The historical saving behavior may be understood as follows: Before the electronic device displays the user interface of the application and the user interface of the recommended application in the form of multi-window, the electronic device has behavior of saving the user interface of the application and the user interface of the recommended application.

Therefore, entries corresponding to the saved user interface of the application and the saved user interface of the recommended application may be used as multi-window entries for subsequent recommendation.

In some examples, the multi-window entry may be a multi-window entry that has been used M consecutive times, where M is a positive integer.

The multi-window entry that has been used M consecutive times is related to historical use behavior. The historical use behavior may be understood as follows: Before the electronic device displays the user interface of the application and the user interface of the recommended application in the form of multi-window, the electronic device has behavior of displaying the user interface of the application and the user interface of the recommended application greater than or equal to M consecutive times. For example, a tablet computer plays a video in a video application, and displays a notification pop-up window of a chat application.

Therefore, entries corresponding to the user interface of the application and the user interface of the recommended application that have been displayed M consecutive times may be used as multi-window entries for subsequent recommendation.

In some examples, the multi-window entries may be multi-window entries that have been used together within preset duration.

The multi-window entries that have been used together within the preset duration are related to historical use behavior. The historical use behavior may be understood as follows: Before the electronic device displays the user interface of the application and the user interface of the recommended application in the form of multi-window, the electronic device has behavior of starting the application and the recommended application within the preset duration. A time sequence of starting the application and the recommended application within the preset duration is not limited. A specific value of the preset duration is not limited in this application. For example, the tablet computer plays the video in the video application, and displays the notification pop-up window of the chat application within the preset duration.

Therefore, entries corresponding to the user interface of the application and the user interface of the recommended application that have been started within the preset duration may be used as multi-window entries for subsequent recommendation.

In some examples, the multi-window entry may be an entry that is recommended based on parameters such as the location of the electronic device and/or the current time of the electronic device and that is related to a plurality of instances in the application. For example, in the application, an entry corresponding to a user interface of the plurality of instances may be used as a multi-window entry for subsequent recommendation.

The plurality of instances in the application may be a plurality of instances of a same activity (Activity), or may be a plurality of instances of different activities.

The activity is a display component of an Android app. The activity provides a window for interacting with the user, and is used to display content of the app. One activity usually corresponds to one independent window. The window may fill the display region of the electronic device, or may be smaller than the display region of the electronic device and float above another window. An app usually includes a plurality of loosely related activities. Generally, the app may specify an activity as a main entry activity, which is an activity presented to the user when the user starts the app for a first time. Correspondingly, a window presented by the main activity is a home page of the app.

It should be understood that this application may include but is not limited to the sources of the multi-window entry.

In addition, a plurality of multi-window entries may be multi-window entries from one source, or may be multi-window entries from a plurality of sources.

The sources of the plurality of multi-window entries may be the same or different.

The plurality of multi-window entries may be sorted in a plurality of manners.

In some examples, the plurality of multi-window entries may be randomly sorted.

In some examples, the plurality of multi-window entries may be sorted based on an occurrence moment of each multi-window entry. A multi-window entry with an earlier occurrence moment is arranged in front of a multi-window entry with a later occurrence moment.

In some examples, the plurality of multi-window entries may be sorted based on occurrence frequency of each multi-window entry. A multi-window entry with higher occurrence frequency is arranged in front of a multi-window entry with lower occurrence frequency.

In some examples, the plurality of multi-window entries may be sorted based on confidence of the multi-window entry of each source. A multi-window entry with higher confidence is arranged in front of a multi-window entry with lower confidence.

It should be understood that the foregoing sorting manners may be separately illustrated or may be randomly combined. This application may include but is not limited to the foregoing multi-window entry sorting manners.

The electronic device may display the multi-window entry of the application in a plurality of manners.

In some examples, the electronic device may display the multi-window entry of the application on the user interface of the application. For example, the multi-window entry of the application is displayed on the user interface of the application in a floating manner.

In some examples, the electronic device may display the multi-window entry of the application on a user interface of another application. The another application may be any application on a home screen, a leftmost screen, a control center, or a notification center of the electronic device. For example, the multi-window entry of the application is displayed on the user interface of the another application as a control, a floating bubble, or a card.

In some examples, the electronic device may display the multi-window entry of the application by triggering an icon of the application.

The electronic device may be a tablet computer, a mobile phone (like a foldable mobile phone or a large-screen mobile phone), a notebook computer, a wearable device, an in-vehicle device, an augmented reality (augmented reality, AR) device/a virtual reality (virtual reality, VR) device, an ultra-mobile personal computer (ultra-mobile personal computer, UMPC), a netbook, a personal digital assistant (personal digital assistant, PDA), a smart TV, a smart screen, a high-definition television, a 4K TV, a smart sound box, a smart projector, and the like. A specific type of the electronic device is not limited in this application.

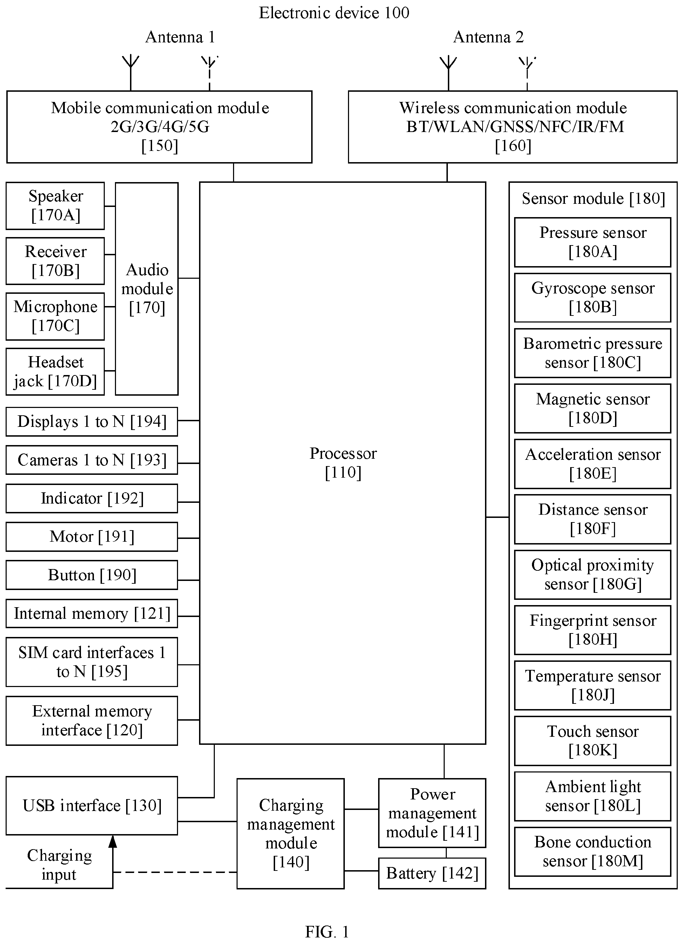

The following describes an electronic device in this application with reference to FIG. 1 by using an example in which the electronic device is a tablet computer.

FIG. 1 is a diagram of a structure of an electronic device according to an embodiment of this application. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this application does not constitute a specific limitation on the electronic device 100. In some embodiments, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some examples, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some examples, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes one serial data line (serial data line, SDA) and one serial clock line (serial clock line, SCL). In some examples, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some examples, the processor 110 may include a plurality of groups of I2S buses. The processor 110 may be coupled to the audio module 170 through the I2S bus, to implement communication between the processor 110 and the audio module 170. In some examples, the audio module 170 may transmit an audio signal to the wireless communication module 160 through the I2S interface, to implement a function of answering a call through a Bluetooth headset.

The PCM interface may also be configured to perform audio communication, and sample, quantize, and encode an analog signal. In some examples, the audio module 170 may be coupled to the wireless communication module 160 through a PCM bus interface. In some examples, the audio module 170 may alternatively transmit the audio signal to the wireless communication module 160 through the PCM interface, to implement the function of answering the call through the Bluetooth headset. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication. In some examples, the UART interface is generally configured to connect the processor 110 and the wireless communication module 160. For example, the processor 110 communicates with a Bluetooth module in the wireless communication module 160 through the UART interface, to implement a Bluetooth function. In some examples, the audio module 170 may transmit the audio signal to the wireless communication module 160 through the UART interface, to implement a function of playing music through the Bluetooth headset.

An MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some examples, the processor 110 communicates with the camera 193 through the CSI, to implement a photographing function of the electronic device 100. The processor 110 communicates with the display 194 through the DSI, to implement a display function of the electronic device 100.

The GPIO interface may be configured by using software. The GPIO interface may be configured as a control signal or a data signal. In some examples, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device, or may be configured to connect to a headset, to play an audio through the headset. The interface may be further configured to connect to another electronic device like an AR device.

It may be understood that an interface connection relationship between the modules shown in this application is merely an example for description, and does not constitute a limitation on the structure of the electronic device 100. In some examples, the electronic device 100 may alternatively use different interface connection manners in the foregoing embodiment, or use a combination of a plurality of interface connection manners.

The charging management module 140 is configured to receive a charging input from a charger. The charger may be a wireless charger, or may be a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 supplies power to the electronic device by using the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like. The power management module 141 may further be configured to monitor parameters such as a battery capacity, a battery cycle count, and a battery health status (electric leakage or impedance). In some examples, the power management module 141 may alternatively be disposed in the processor 110. In some examples, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may also be multiplexed to improve antenna utilization. For example, the antenna 1 may be multiplexed as a diversity antenna of a wireless local area network. In some examples, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some examples, at least some functional modules in the mobile communication module 150 may be disposed in the processor 110. In some examples, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video through the display 194. In some examples, the modem processor may be an independent component. In some examples, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some examples, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some examples, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some examples, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some examples, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. Therefore, the electronic device 100 may play or record videos in a plurality of encoding formats, for example, moving picture experts group (moving picture experts group, MPEG)-1, MPEG-2, MPEG-3, and MPEG-4.

An NPU is a neural-network (neural-network, NN) computing processor, quickly processes input information by drawing on a structure of a biological neural network, for example, by drawing on a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to expand a storage capability of the electronic device 100. The external memory card communicates with the processor 110 through the external memory interface 120, to implement a data storage function, for example, store files such as music and a video in the external memory card.

The internal memory 121 may be configured to store computer-executable program code, and the computer-executable program code includes instructions. The processor 110 runs the instructions stored in the internal memory 121, to perform various function applications of the electronic device 100 and data processing. The internal memory 121 may include a program storage region and a data storage region. The program storage region may store an operating system, an application required by at least one function (for example, a voice playing function or an image playing function), and the like. The data storage region may store data (such as audio data and an address book) created during use of the electronic device 100, and the like. In addition, the internal memory 121 may include a high-speed random access memory, or may include a nonvolatile memory, for example, at least one magnetic disk storage device, a flash storage device, or a universal flash storage (universal flash storage, UFS).

The electronic device 100 may implement audio functions such as music playing and recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some examples, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some examples, two microphones 170C may be disposed in the electronic device 100, to collect a sound signal and further implement a noise reduction function. In some examples, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some examples, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some examples, touch operations that are performed on a same touch location but have different touch operation intensity may correspond to different operation instructions. For example, when a touch operation whose touch operation intensity is less than a first pressure threshold is performed on a short message application icon, an instruction for viewing a short message is performed. When a touch operation whose touch operation intensity is greater than or equal to the first pressure threshold is performed on the short message application icon, an instruction for creating a new short message is performed.

The gyroscope sensor 180B may be configured to determine a moving posture of the electronic device 100. In some examples, angular velocities of the electronic device 100 around three axes (which are x, y, and z axes) may be determined by using the gyroscope sensor 180B. The gyroscope sensor 180B may be configured to implement image stabilization during photographing. For example, when a shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some examples, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening and closing of a flip cover leather case by using the magnetic sensor 180D. In some examples, when the electronic device 100 is a clamshell phone, the electronic device 100 may detect opening and closing of a flip cover based on the magnetic sensor 180D. Further, a feature like automatic unlocking of the flip cover is set based on a detected opening or closing state of the leather case or a detected opening or closing state of the flip cover.

The acceleration sensor 180E may detect magnitudes of accelerations of the electronic device 100 in various directions (generally on three axes). When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some examples, in a photographing scenario, the electronic device 100 may measure a distance through the distance sensor 180F to implement quick focusing.

The optical proximity sensor 180G may include, for example, a light-emitting diode (LED) and an optical detector, for example, a photoelectric diode. The light-emitting diode may be an infrared light-emitting diode. The electronic device 100 emits infrared light by using the light-emitting diode. The electronic device 100 detects infrared reflected light from a nearby object through the photoelectric diode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen (namely, a display) for power saving. The optical proximity sensor 180G may also be used in a leather case mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some examples, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some examples, when the temperature is lower than another threshold, the electronic device 100 heats the battery 142 to avoid abnormal shutdown of the electronic device 100 caused by a low temperature. In some examples, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some examples, the touch sensor 180K may alternatively be disposed on a surface of the electronic device 100 at a location different from that of the display 194.

The bone conduction sensor 180M may obtain a vibration signal. In some examples, the bone conduction sensor 180M may obtain a vibration signal of a vibration bone of a human vocal-cord part. The bone conduction sensor 180M may also be in contact with a body pulse to receive a blood pressure beating signal. In some examples, the bone conduction sensor 180M may alternatively be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different regions of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may be further compatible with an external memory card. The electronic device 100 interacts with a network through the SIM card, to implement functions such as conversation and data communication. In some examples, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this application, an Android system with a layered architecture is used as an example to describe a software structure of the electronic device 100. A type of an operating system of the electronic device is not limited in this application. For example, an Android system, a Linux system, a Windows system, an iOS system, or a Harmony operating system (harmony operating system, Harmony OS).

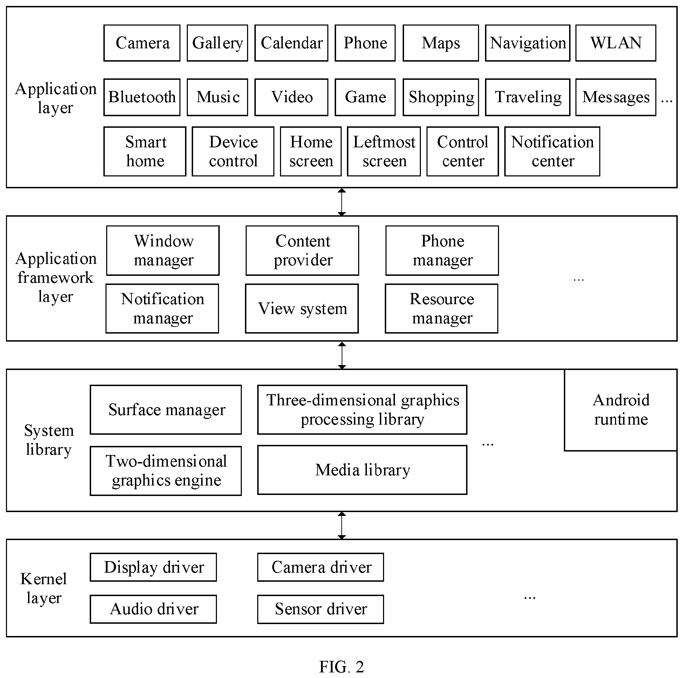

FIG. 2 is a block diagram of a software structure of an electronic device according to an embodiment of this application. As shown in FIG. 2, in a layered architecture, software is divided into several layers, and each layer has a clear role and task. The layers communicate with each other through a software interface. In some examples, the Android system is divided into four layers: an application (APP) layer, an application framework (APP framework) layer, an Android runtime (Android runtime) and system library (library), and a kernel (kernel) layer from top to bottom.

The application layer may include a series of application packages.

As shown in FIG. 2, the application packages may include applications (application, APP) such as Camera, Gallery, Calendar, Phone, Maps, Navigation, WLAN, Bluetooth, Music, Video, Game, Chat, Shopping, Traveling, Instant Messaging (for example, Messages), Smart home, Device control.

The smart home application may be used to control or manage a home device having a networking function. For example, the home device may include an electric light, a television, and an air conditioner. For another example, the home device may further include an anti-theft door lock, a sound box, a floor sweeping robot, a socket, a body fat scale, a lamp, an air purifier, a refrigerator, a washing machine, a water heater, a microwave oven, a rice cooker, a curtain, a fan, a television, a set-top box, a door and window, and the like.

In addition, the application package may further include applications such as a home screen (namely, a desktop), a leftmost screen, a control center, and a notification center.

The leftmost screen may also be referred to as a "-1 screen", and refers to a user interface (user interface, UI) obtained by sliding rightward on a home screen of the electronic device until sliding to a leftmost split screen. For example, the leftmost screen may be used to place some shortcut service functions and notification messages, such as global search, a shortcut entry (payment code, WeChat, and the like) to a page of an application, instant information and reminders (such as express delivery information, expenditure information, commuter traffic information, taxi information, and schedule information), and following dynamics (such as a football bulletin board, a basketball bulletin board, and stock information). The control center is a slide-up message notification bar of the electronic device, that is, a user interface displayed by the electronic device when a user starts to perform a slide-up operation at the bottom of the electronic device. The notification center is a drop-down message notification bar of the electronic device, that is, a user interface displayed by the electronic device when the user starts to perform a downward operation at the top of the electronic device.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager (window manager) is configured to manage window programs, such as window status and attribute management, view (view) adding, deleting, and updating, a window sequence, and message collection and processing. The window manager may obtain a size of a display, determine whether there is a status bar, perform screen locking, take a screenshot, and the like. In addition, the window manager is an entry for external access to the window.

The content provider is configured to: store and obtain data, and enable the data to be accessed by an application. The data may include a video, an image, an audio, calls that are made and received, a browsing history, a bookmark, an address book, and the like.

The view system includes visual controls such as a control for displaying a text and a control for displaying an image. The view system may be configured to construct an application. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager (resource manager) provides various resources for an application, such as a localized character string, an icon, a picture, a user interface layout file (layout xml), a video file, a font, a color, and an identity (identity, ID) number (which may also be referred to as a serial number or an account) of a user interface module (user interface module, UI module). In addition, the resource manager is configured to manage the foregoing resources in a unified manner.

The notification manager (notification manager) enables the application to display notification information in the status bar, and may be configured to convey a notification type message, which may automatically disappear after a short stay without user interaction. For example, the notification manager is configured to notify download completion, give a message notification, and the like. The notification manager may alternatively be a notification that appears in a top status bar of a system in a form of graph or scroll bar text, for example, a notification of an application that is run in the background, or may be a notification that appears on a screen in a form of dialog window. For example, text information is displayed in the status bar, an alert tone is made, the electronic device vibrates, or an indicator light blinks.

The Android runtime includes a core library and a virtual machine. The Android runtime is responsible for scheduling and management of the Android system.

The core library includes two parts: a function that needs to be called in a Java language and the core library of the Android system.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), a 2D graphics engine (for example, SGL), an image processing library, a desktop launcher (launcher), and the like.

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a scenario in which a sound is played by using a smart sound box.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a smart sound box icon. A smart sound box application invokes an interface at the application framework layer, so that the smart sound box application is started. Then, an audio driver is started by invoking the kernel layer, and an audio electrical signal is converted into a sound signal by the speaker 170A.

It may be understood that the structure shown in this application does not constitute a specific limitation on the electronic device 100. In some embodiments, the electronic device 100 may include more or fewer components than those shown in the figure, or combine some components, or split some components, or have different component arrangements. The components shown in the figure may be implemented by hardware, software, or a combination of software and hardware.

Based on the foregoing descriptions, in the following embodiments of this application, the electronic device having the structures shown in FIG. 1 and FIG. 2 is used as an example to describe in detail the application multi-window presentation method provided in this application with reference to the accompanying drawings and application scenarios.

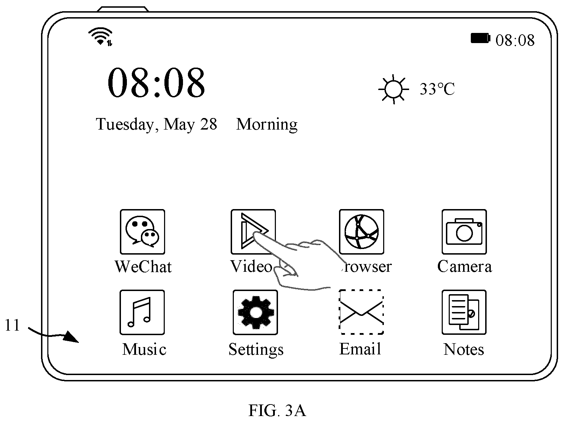

FIG. 3A to FIG. 3R are diagrams of human-computer interaction interfaces according to an embodiment of this application. For ease of description, in FIG. 3A to FIG. 3R, an example in which the electronic device is a tablet computer is used for illustration.

The tablet computer may display a user interface 11 shown as an example in FIG. 3A. The user interface 11 may be a main interface of the home screen (home screen). The user interface 11 may include but is not limited to a status bar, a navigation bar, a calendar indicator, a weather indicator, and a plurality of application icons, for example, an icon of an instant messaging application (for example, a chat application), an icon of a video application, an icon of a browser application, an icon of a camera application, an icon of a music application, an icon of a settings application, an icon of an email application, an icon of a notes application, and the like.

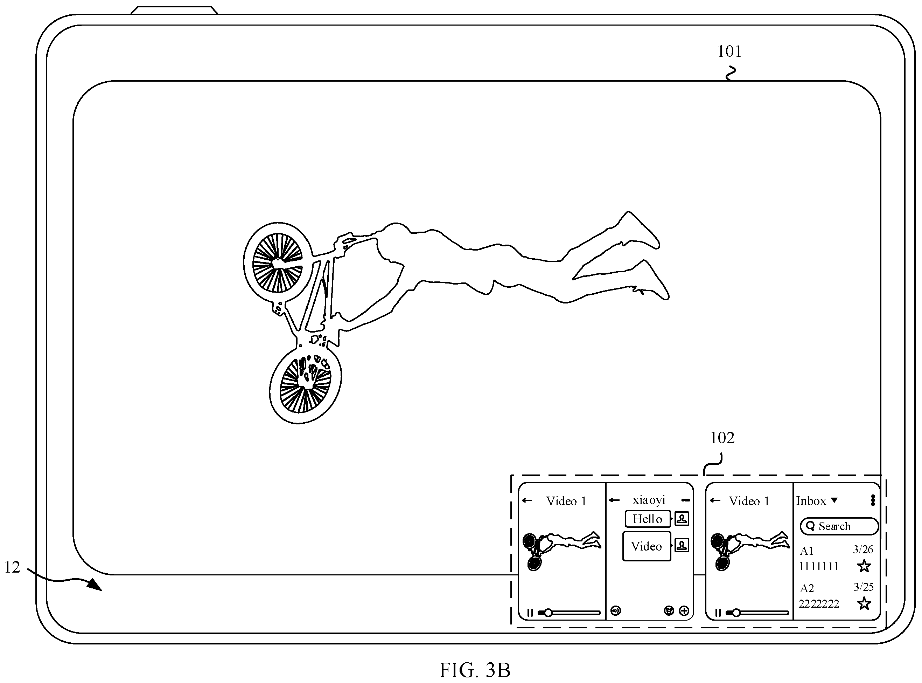

After detecting an operation in which a user indicates to open a video 1 in the video application shown in FIG. 3A, the tablet computer may display a user interface 12 shown as an example in any one of FIG. 3B to FIG. 3G. The user interface 12 is used to display a window 101 and a recommendation bar 102.

The window 101 is used to play the video 1 in the video application. The recommendation bar 102 is used to recommend one or more multi-window entries of the video application, and each multi-window entry is used to trigger multi-window display of a user interface of the video application and a user interface of a recommended application.

In some examples, the recommendation bar 102 may be displayed above the window 101 in a floating manner. The window 101 and the recommendation bar 102 have an overlapping region or do not overlap. The window 101 may be displayed in an entire region or a part of the region of the user interface 12. The recommendation bar 102 may be located at any location, for example, the top, the bottom, a left side edge, or a right side edge of the user interface 12.

The recommendation bar 102 includes one or more multi-window entries, and each multi-window entry may use one or more forms such as a card, a control, and a floating bubble.

The following describes in detail several implementations of the recommendation bar 102 with reference to FIG. 3B to FIG. 3G.

Display content of the multi-window entry in the recommendation bar 102 may have a plurality of styles.

In some examples, the multi-window entry may be displayed in a form of interface snapshot of an application. For example, in FIG. 3B, the recommendation bar 102 is displayed above the window 101 in a floating manner, and the recommendation bar 102 is located at the bottom of the user interface 12. The recommendation bar 102 includes two multi-window entries, and each multi-window entry is displayed in a form of card. In one multi-window entry, respective snapshots of the video application and the chat application are displayed in a vertical split-screen manner, and in the other multi-window entry, respective snapshots of the video application and the email application are displayed in the vertical split-screen manner.

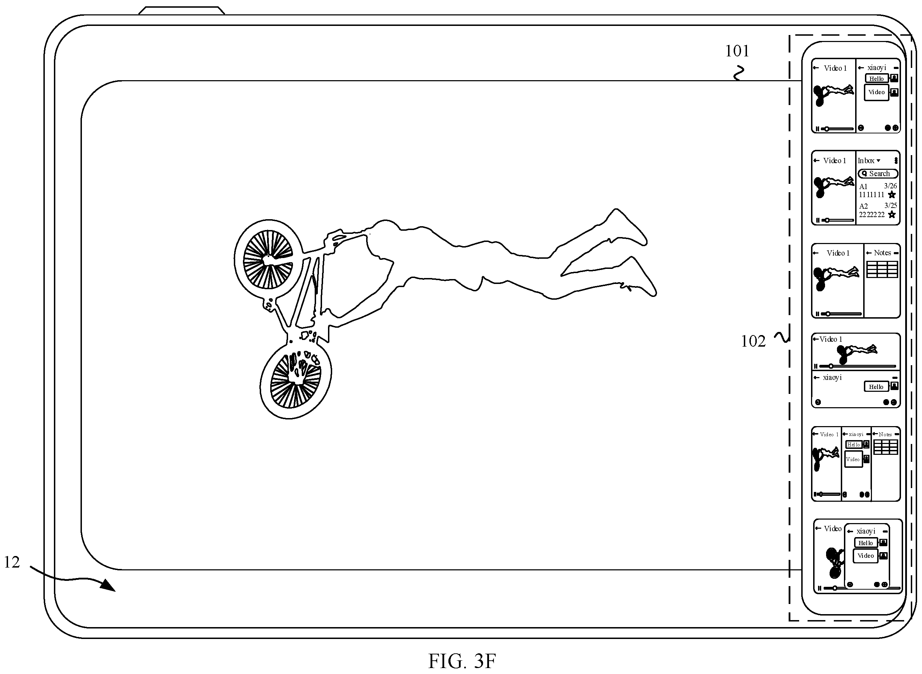

For another example, in FIG. 3F, the recommendation bar 102 is displayed above the window 101 in a floating manner, and the recommendation bar 102 is located at the right side edge of the user interface 12. The recommendation bar 102 includes six multi-window entries, and each multi-window entry is displayed in a form of control or card. In a first multi-window entry, respective snapshots of the video application and the chat application are displayed in a vertical split-screen manner, in a second multi-window entry, respective snapshots of the video application and the email application are displayed in the vertical split-screen manner, in a third multi-window entry, respective snapshots of the video application and the notes application are displayed in the vertical split-screen manner, in a fourth multi-window entry, respective snapshots of the video application and the chat application are displayed in a horizontal split-screen manner, in a fifth multi-window entry, respective snapshots of the video application, the chat application, and the email application are displayed in a three-split-screen manner, and in a sixth multi-window entry, respective snapshots of the video application and the chat application are displayed in a full-screen and floating-window manner.

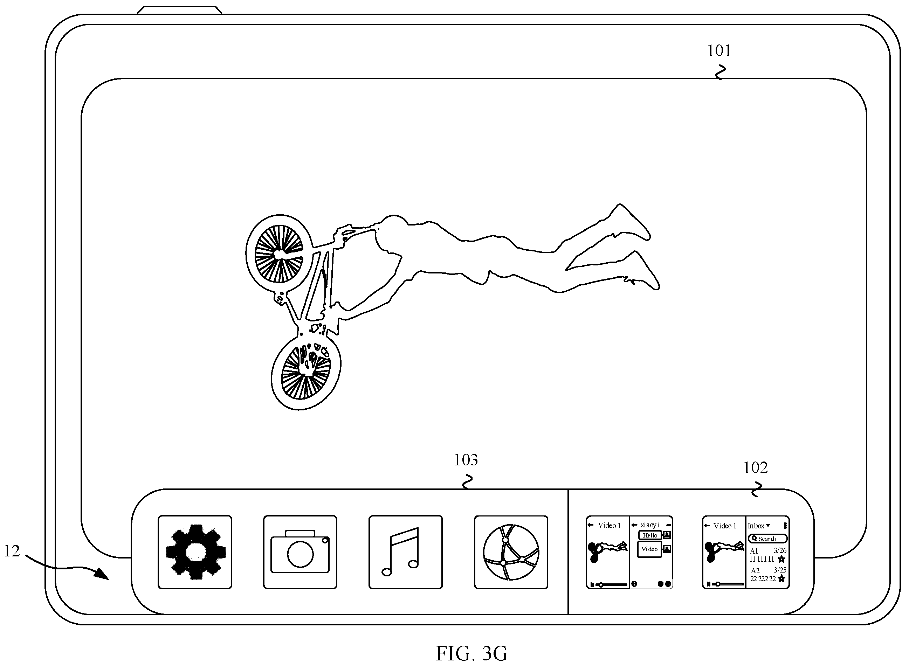

For another example, in FIG. 3G, the recommendation bar 102 is displayed on an interface 103 of a dock (Dock), the interface 103 of the dock is displayed above the window 101 in a floating manner, and the interface 103 of the dock is located at the bottom of the user interface 12. A display form of the recommendation bar 102 may be a control or a card. The recommendation bar 102 includes two multi-window entries, and each multi-window entry is displayed in a form of control. In one multi-window entry, respective snapshots of the video application and the chat application are displayed in a vertical split-screen manner, and in the other multi-window entry, respective snapshots of the video application and the email application are displayed in the vertical split-screen manner.

The interface 103 of the dock is a function interface that is on a UI and that is used to start or switch an application, and includes an icon or another type of control for starting or switching an application. Operations such as adding, deleting, or moving may be performed on the icon of the application in the dock, to display, to the user on each UI, an application that can support a floating-window manner, a split-screen manner, or a full-screen manner. There may be a plurality of operations in which the user indicates to open the dock. Generally, in an Android system, the dock may be invoked through sliding inward from any side edge of a display of the electronic device and then pausing. Therefore, the interface 103 of the dock may be displayed at a location of the corresponding side edge. In addition, the user may alternatively tap a hardware button or a virtual button used to open the dock. Therefore, the interface 103 of the dock may be displayed on the display of the electronic device. The interface 103 of the dock may alternatively be fixedly displayed at a location on the display, for example, fixedly displayed at a lower part of the display.

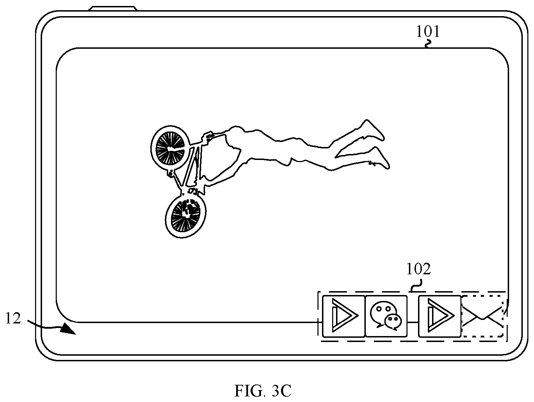

In some examples, the multi-window entry may be displayed in a form of icon of an application. For example, in FIG. 3C, the recommendation bar 102 is displayed above the window 101 in a floating manner, and the recommendation bar 102 is located at the bottom of the user interface 12. The recommendation bar 102 includes two multi-window entries, and each multi-window entry is displayed in a form of card or icon combination. In one multi-window entry, respective icons of the video application and the chat application are displayed in a vertical split-screen manner, and in the other multi-window entry, respective icons of the video application and the email application are displayed in the vertical split-screen manner.

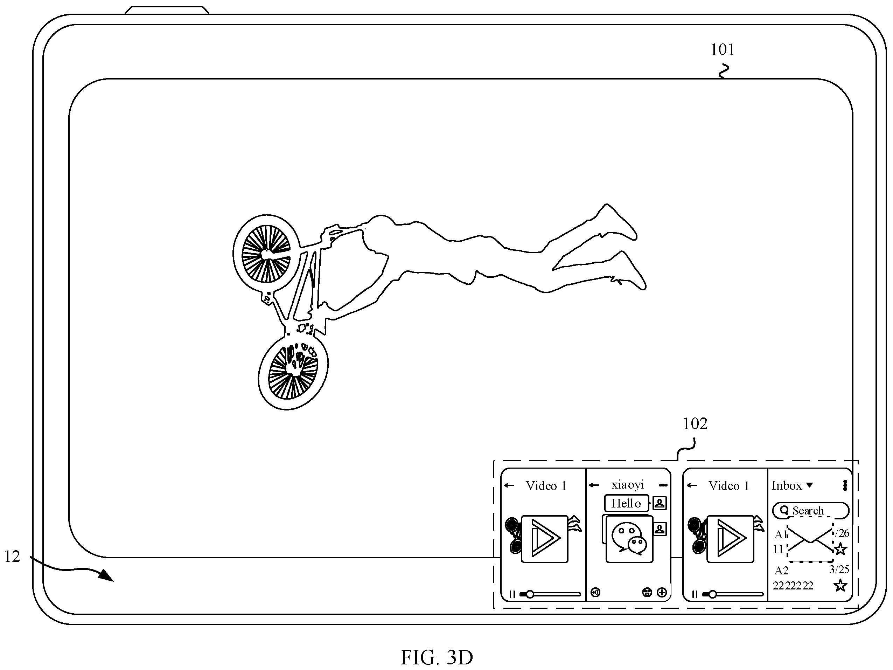

In some examples, the multi-window entry may be displayed in a form of interface snapshot or icon of an application. For example, in FIG. 3D, the recommendation bar 102 is displayed above the window 101 in a floating manner, and the recommendation bar 102 is located at the bottom of the user interface 12. The recommendation bar 102 includes two multi-window entries, and each multi-window entry is displayed in a form of card or icon combination. In one multi-window entry, respective snapshots and icons of the video application and the chat application are displayed in a vertical split-screen manner, and in the other multi-window entry, respective snapshots and icons of the video application and the email application are displayed in the vertical split-screen manner. In addition, an icon of each application is displayed above a snapshot of the application in a floating manner.

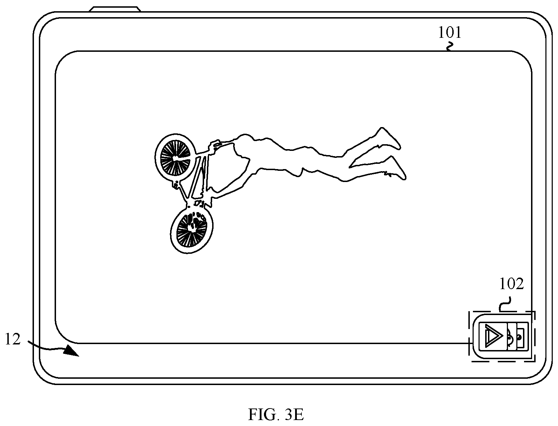

In some examples, the multi-window entry may be displayed in a form of floating bubble. For example, in FIG. 3E, the recommendation bar 102 is displayed above the window 101 in a floating manner, and the recommendation bar 102 is located at the bottom of the user interface 12. The recommendation bar 102 includes one multi-window entry. In the multi-window entry, an icon formed by the video application, the chat application, and the email application is displayed. A display form of the multi-window entry may be a floating bubble. In addition, the multi-window entry may alternatively be displayed by using another preset pattern.

It can be learned that this application includes but is not limited to the foregoing display content of the multi-window entry. In addition, a display manner, a display location, a display form, and a display manner of the multi-window entry and a display quantity of multi-window entries in the recommendation bar 102 are not limited either.

The recommendation bar may be displayed in various manners. For example, in FIG. 3B to FIG. 3F, the recommendation bar 102 is displayed at any location above the window 101 in a floating manner. On the user interface 12 in FIG. 3G, the recommendation bar 102 is displayed on the interface 103 of the dock, and the interface 103 of the dock is displayed above the window 101 in a floating manner.

A display location of the recommendation bar 102 on the display may not be limited. For example, in FIG. 3B to FIG. 3E, the display location of the recommendation bar 102 is the bottom of the user interface 12. In FIG. 3F, the display location of the recommendation bar 102 is a side edge of the user interface 12. In FIG. 3G, the display location of the recommendation bar 102 is on the interface 103 of the dock, and the display location of the interface 103 of the dock is the bottom of the user interface 12.

The multi-window entry in the recommendation bar may be displayed in various forms. For example, in FIG. 3B to FIG. 3D and FIG. 3F, the display form of the recommendation bar 102 is a card. In FIG. 3E, the display form of the recommendation bar 102 is a floating bubble. In FIG. 3G, the display form of the recommendation bar 102 is a control.

The display manner of the multi-window entry and the display quantity of multi-window entries in the recommendation bar 102 may not be limited. For example, in FIG. 3B to FIG. 3D and FIG. 3G, the display manner of the multi-window entry is the vertical split-screen manner. There are two multi-window entries. In FIG. 3E, the display manner of the multi-window entry is not a multi-window display manner. There is only one multi-window entry. In FIG. 3F, the display manner of the multi-window entry includes the vertical split-screen manner, the horizontal split-screen manner, and the floating display manner. There are six multi-window entries.

It should be understood that an implementation of the multi-window entry in this application includes but is not limited to the multi-window entry in the recommendation bar 102 in FIG. 3B to FIG. 3G.

In some examples, display priorities of a plurality of multi-window entries in the recommendation bar 102 may be set based on factors such as a use habit of the user, possibilities of using the multi-window entries, or the like. For example, a higher display priority indicates a higher probability of using a multi-window entry by the user. In this case, the multi-window entry may be displayed in a range closer to a tapping range or an implementation range of the user. For example, the plurality of multi-window entries in the recommendation bar 102 may be sequentially displayed from left to right in descending order of display priorities.

For example, in a process of starting the video application, the tablet computer may perform the following steps.

Step A1: The tablet computer may determine whether there is a multi-window entry predefined by the user for the video application.

If there is a multi-window entry predefined by the user for the video application, the tablet computer may obtain the multi-window entry predefined by the user for the video application.

If there is no multi-window entry predefined by the user for the video application, the tablet computer may determine not to display the multi-window entry predefined by the user.

Step A2: The tablet computer may determine whether a user interface recommended last time is displayed when the video application is used last time.

If the user interface recommended last time is displayed when the video application is used last time, the tablet computer may obtain a multi-window entry recommended last time.

If the user interface recommended last time is not displayed when the video application is used last time, the tablet computer may determine not to display the multi-window entry recommended last time.

Step A3: The tablet computer may determine whether a user interface that is displayed in a form of multi-window and that is of the video application is saved.

If the user interface that is displayed in the form of multi-window and that is of the video application is saved, the tablet computer may obtain a historically saved multi-window entry corresponding to the saved user interface.

If the user interface that is displayed in the form of multi-window and that is of the video application is not saved, the tablet computer may determine not to display the historically saved multi-window entry.

Step A4: The tablet computer may determine whether there is a user interface that has been used two consecutive times.

If there is the user interface that has been used two consecutive times, the tablet computer may obtain a multi-window entry corresponding to the user interface that has been used two consecutive times.

If there is no user interface that has been used two consecutive times, the tablet computer may determine not to display a multi-window entry that has been used two consecutive times.

Step A5: The tablet computer may determine whether there are user interfaces that have been used together within preset duration.

If there are user interfaces that have been used together within the preset duration, the tablet computer may obtain multi-window entries corresponding to the user interfaces that have been used together within the preset duration.

If there are no user interfaces that have been used together within the preset duration, the tablet computer may determine not to display entries that have been used together within the preset duration.

It can be learned from the foregoing examples that the tablet computer may sort the multi-window entries based on one or more of sources, occurrence moments, occurrence frequency, and confidence of the multi-window entries. Therefore, the tablet computer may display one or more multi-window entries on the user interface of the video application. Herein, the sources, the occurrence moments, the occurrence frequency, the confidence, and the like of the multi-window entries are used to reflect the use habit of the user, the possibilities of using the multi-window entries, and the like. In some other examples, the display priorities of the multi-window entries may alternatively be set by using another item. This is not limited in this application.

In some examples, the display priorities of the multi-window entries may change. In this case, even if a plurality of same multi-window entries are displayed, a display sequence of the plurality of multi-window entries may accordingly change based on a change of the display priorities.

For ease of description, the following uses the recommendation bar 102 shown in FIG. 3B as an example for description in this application.

Editing may be performed on the recommendation bar 102, for example, expanding, collapsing, hiding, moving, region size adjusting, full presentation, suppressing, entry editing, deleting, updating, replacing, detail viewing, adding, and the like. Therefore, the recommendation bar 102 is conveniently and flexibly used.

Suppressing means that the tablet computer may recommend one or more multi-window entries based on a tap operation and/or a slide operation previously performed on the recommendation bar 102 and sorting or priorities of the multi-window entries.

In addition, when the tablet computer does not receive an operation on the recommendation bar 102 after duration 1, the tablet computer may actively hide the recommendation bar 102, that is, may not continue to display the recommendation bar 102.

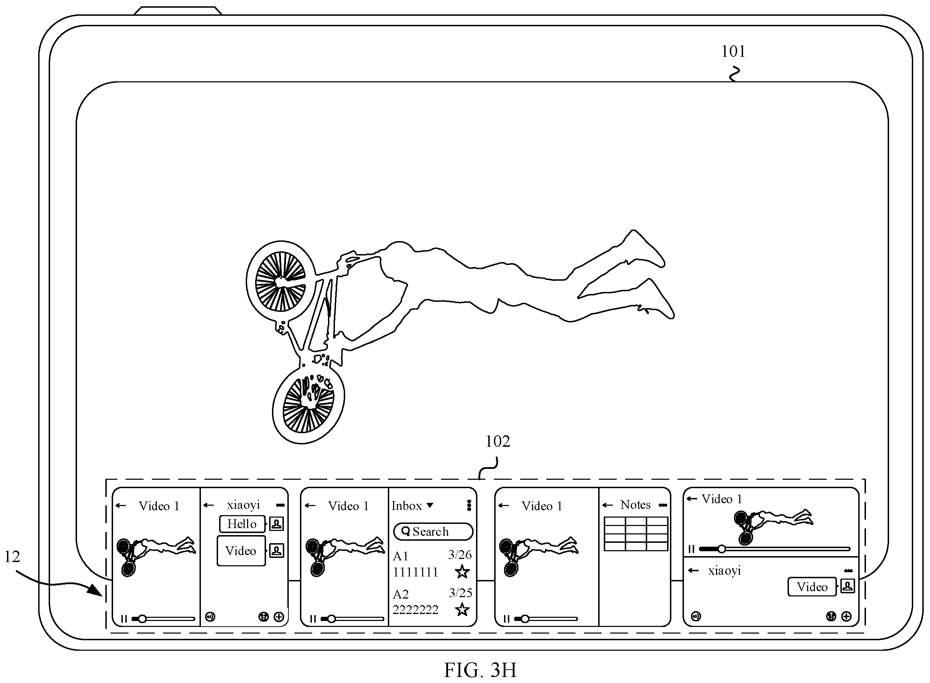

With reference to FIG. 3B and FIG. 3H to FIG. 3J, the following describes in detail several implementations of implementing editing on the recommendation bar 102 shown in FIG. 3B.

In some examples, after detecting an operation (for example, pressing and holding the recommendation bar 102 and sliding leftwards) in which the user indicates to expand the recommendation bar 102 shown in FIG. 3B, the tablet computer may display the user interface 12 shown as an example in FIG. 3H. The recommendation bar 102 changes from a normal state shown in FIG. 3B to an expanded state shown in FIG. 3H, and more multi-window entries are further recommended on the recommendation bar 102. Therefore, more multi-window entries can be provided for the user.

In some examples, after detecting an operation (for example, pressing and holding the recommendation bar 102 and sliding rightwards) in which the user indicates to resume presenting the recommendation bar 102 shown in FIG. 3H, the tablet computer may display the user interface 12 shown as an example in FIG. 3B. The recommendation bar 102 changes from the expanded state shown in FIG. 3H to the normal state shown in FIG. 3B. Therefore, it is convenient for the user to flexibly operate the recommendation bar 102.

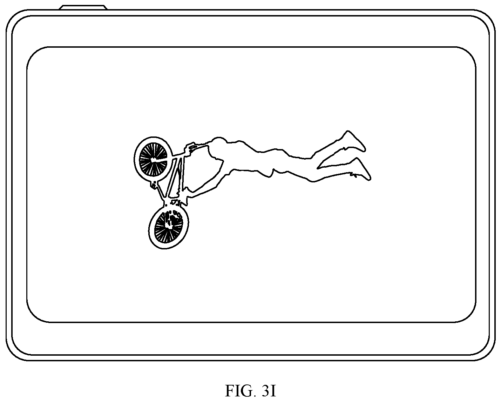

In some examples, after detecting an operation (for example, pressing and holding the recommendation bar 102 and sliding rightwards to a side edge of the display) in which the user indicates to hide the recommendation bar 102 shown in FIG. 3B, the tablet computer may display the user interface 12 shown as an example in FIG. 3I. The recommendation bar 102 changes from the normal state shown in FIG. 3B to a collapsed state shown in FIG. 3I. Therefore, the user can clearly view the window 101.

In some examples, after detecting an operation (for example, sliding leftwards from the side edge of the display) in which the user indicates to trigger presenting the recommendation bar 102 in FIG. 3I, the tablet computer may display the user interface 12 shown as an example in FIG. 3B. The recommendation bar 102 changes from being collapsed shown in FIG. 3I to being in the normal state shown in FIG. 3B. Therefore, the user can clearly view the recommendation bar 102.

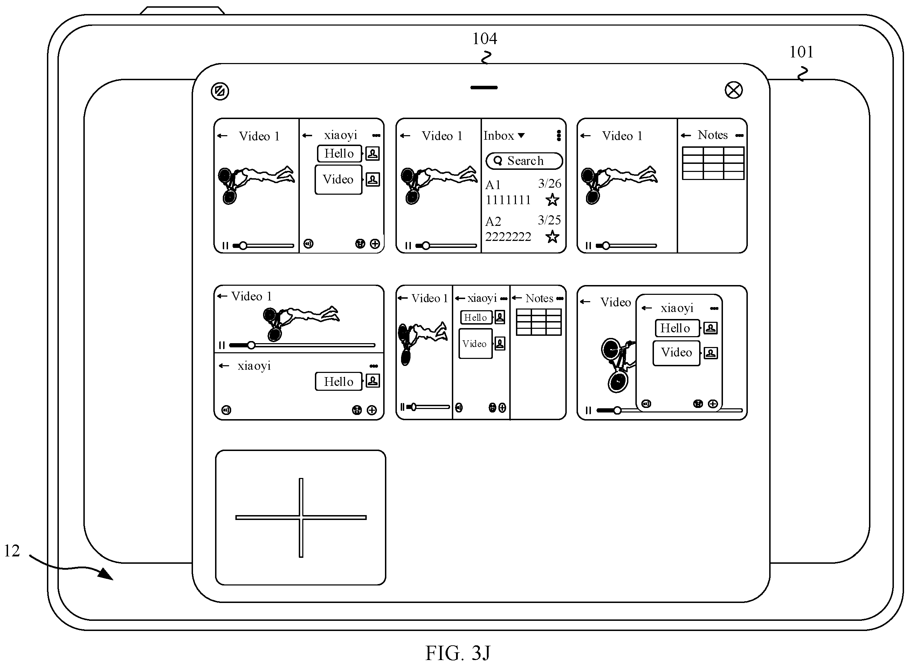

In some examples, after detecting an operation (for example, pressing and holding the recommendation bar 102 and dragging the recommendation bar 102 to a preset region 1 of the display) in which the user indicates to fully present the recommendation bar 102 shown in FIG. 3B, the tablet computer may display a window 104 on the user interface 12 shown as an example in FIG. 3J. The window 104 is used to display each recommended multi-window entry. Therefore, the user can clearly view each recommended multi-window entry.

In some examples, the window 104 is further configured to adjust a sequence of the multi-window entries in the recommendation bar 102, add a multi-window entry, delete a multi-window entry, move the entire window 104, and the like. Therefore, it is convenient for the user to perform at least one of the following operations on the multi-window entry: location moving, adding, or deleting.

After detecting an operation (for example, tapping a close button in the window 104 or tapping a region other than the window 104) in which the user indicates to close the window 104 shown in FIG. 3J, the tablet computer may display the user interface 12 shown as an example in FIG. 3B. Therefore, it is convenient for the user to flexibly operate the recommendation bar 102.

In some examples, after detecting an operation (for example, sliding leftwards in the recommendation bar 102) in which the user indicates to view another multi-window entry in the recommendation bar 102 shown in FIG. 3B, the tablet computer may present an updated multi-window entry in the recommendation bar 102. Therefore, more multi-window entries can be provided for the user. In addition, the tablet computer may further resume displaying the recommendation bar 102 shown in FIG. 3B from the recommendation bar 102 having content of the updated multi-window entry.

In some examples, after detecting an operation (for example, pressing and holding the recommendation bar 102 and dragging the recommendation bar 102 to a preset region 2 of the display) in which the user indicates to enlarge the entire recommendation bar 102 shown in FIG. 3B, the tablet computer may further present an enlarged recommendation bar 102. Therefore, it is convenient for the user to flexibly operate the recommendation bar 102. In addition, the tablet computer may further resume the enlarged recommendation bar 102 to the recommendation bar 102 shown in FIG. 3B.

In some examples, after detecting an operation (for example, pressing and holding one multi-window entry in the recommendation bar 102 and sliding downwards) in which the user indicates to delete the multi-window entry in the recommendation bar 102 shown in FIG. 3B, the tablet computer may further delete the multi-window entry, and present the recommendation bar 102 having content of an updated multi-window entry. Therefore, it is convenient for the user to flexibly update the recommendation bar 102.

In some examples, after detecting an operation (for example, pressing and holding a multi-window entry in the recommendation bar 102 and releasing the multi-window entry at a location of another multi-window entry) in which the user indicates to move the multi-window entry in the recommendation bar 102 shown in FIG. 3B, the tablet computer may further exchange locations of the two multi-window entries, and present the recommendation bar 102 having updated locations of the multi-window entries. Therefore, it is convenient for the user to flexibly update the recommendation bar 102.

In some examples, after detecting an operation in which the user indicates to open the video 1 in the video application shown in FIG. 3A, the tablet computer may display the user interface 12 shown as an example in any one of FIG. 3B to FIG. 3G, and may further display the user interface 12 shown as an example in FIG. 3H.

With reference to FIG. 3B and FIG. 3H to FIG. 3N, the following describes in detail several implementations of implementing editing on the recommendation bar 102 shown in FIG. 3H.

In some examples, after detecting an operation (for example, pressing and holding the recommendation bar 102 and sliding rightwards to the side edge of the display) in which the user indicates to hide the recommendation bar 102 shown in FIG. 3H, the tablet computer may display the user interface 12 shown as an example in FIG. 3I. The recommendation bar 102 changes from the expanded state shown in FIG. 3B to the collapsed state shown in FIG. 3I. Therefore, the user can clearly view the window 101.

In some examples, after detecting an operation (for example, sliding leftwards from the side edge of the display) in which the user indicates to trigger presenting the recommendation bar 102 in FIG. 3I, the tablet computer may display the user interface 12 shown as an example in FIG. 3H. The recommendation bar 102 changes from being collapsed shown in FIG. 3I to being in the expanded state shown in FIG. 3H. Therefore, more multi-window entries can be provided for the user.

In some examples, after detecting an operation (for example, pressing and holding the recommendation bar 102 and dragging the recommendation bar 102 to a preset region 3 of the display) in which the user indicates to fully present the recommendation bar 102 shown in FIG. 3H, the tablet computer may display the window 104 on the user interface 12 shown as an example in FIG. 3J. Therefore, the user can clearly view each recommended multi-window entry.

In some examples, after detecting an operation (for example, tapping a close button in the window 104 or tapping a region other than the window 104) in which the user indicates to close the window 104 shown in FIG. 3J, the tablet computer may display the user interface 12 shown as an example in FIG. 3H or FIG. 3B. Therefore, it is convenient for the user to flexibly operate the recommendation bar 102.

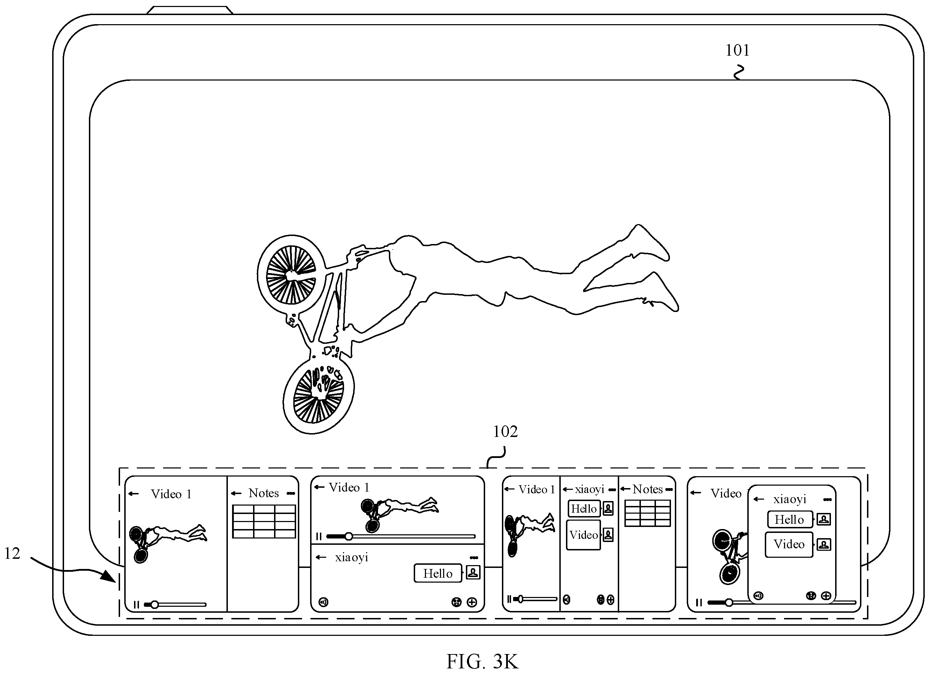

In some examples, after detecting an operation (for example, sliding leftwards in the recommendation bar 102) in which the user indicates to view another multi-window entry in the recommendation bar 102 shown in FIG. 3H, the tablet computer may display the user interface 12 shown as an example in FIG. 3K. The recommendation bar 102 is still in the expanded state, and the recommendation bar 102 further recommends another multi-window entry. Therefore, more multi-window entries can be provided for the user.

In some examples, after detecting an operation (for example, sliding rightwards in the recommendation bar 102) in which the user indicates to return to the multi-window entry in the recommendation bar 102 shown in FIG. 3K, the tablet computer may display the user interface 12 shown as an example in FIG. 3H. Therefore, it is convenient for the user to flexibly operate the recommendation bar 102.

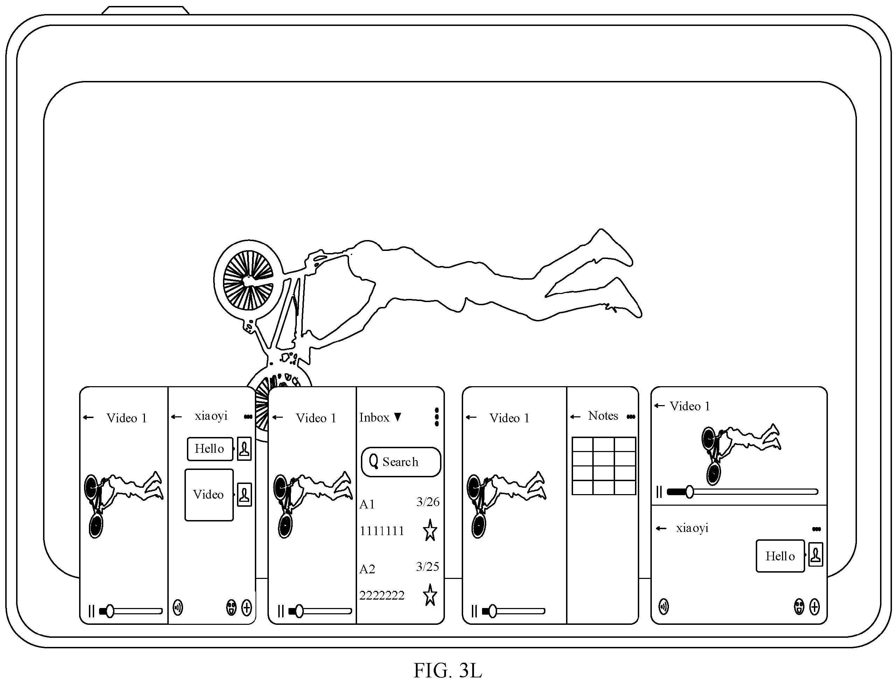

In some examples, after detecting an operation (for example, pressing and holding the recommendation bar 102 and sliding upwards) in which the user indicates to enlarge the entire recommendation bar 102 shown in FIG. 3H, the tablet computer may display the user interface 12 shown as an example in FIG. 3L. Therefore, a size of the recommendation bar 102 is adjusted, so that the user can clearly view the multi-window entry.

In some examples, after detecting an operation (for example, pressing and holding the recommendation bar 102 and sliding downwards) in which the user indicates to resume presenting the recommendation bar 102 shown in FIG. 3L, the tablet computer may display the user interface 12 shown as an example in FIG. 3H. Therefore, the size of the recommendation bar 102 is resumed, so that the user can flexibly operate the recommendation bar 102.

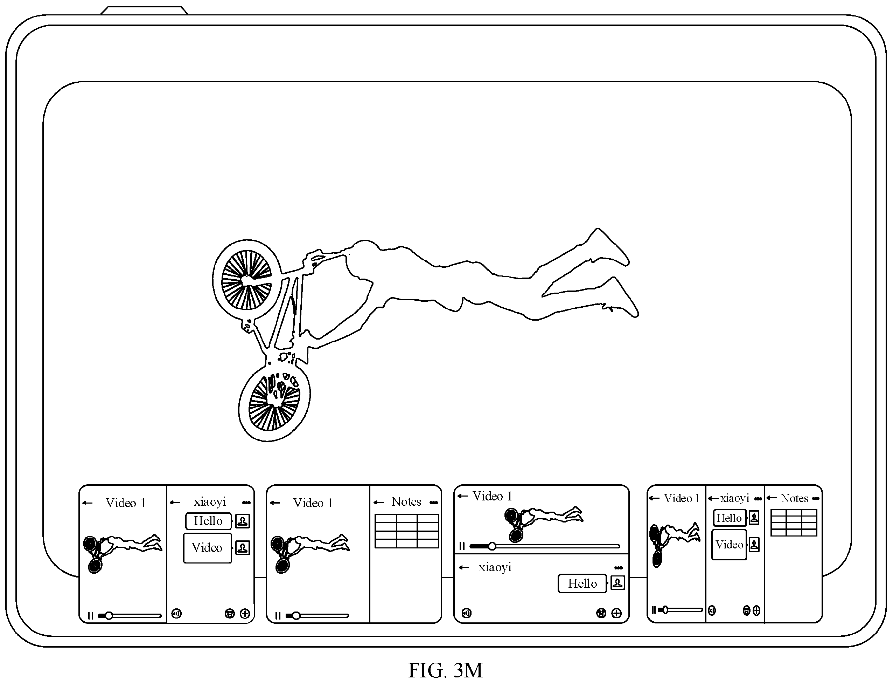

In some examples, after detecting an operation (for example, pressing and holding one multi-window entry in the recommendation bar 102 and sliding downwards) in which the user indicates to delete the multi-window entry in the recommendation bar 102 shown in FIG. 3H, the tablet computer may display the user interface 12 shown as an example in FIG. 3M. Therefore, content of the recommendation bar 102 is adjusted, so that the user can view more multi-window entries.

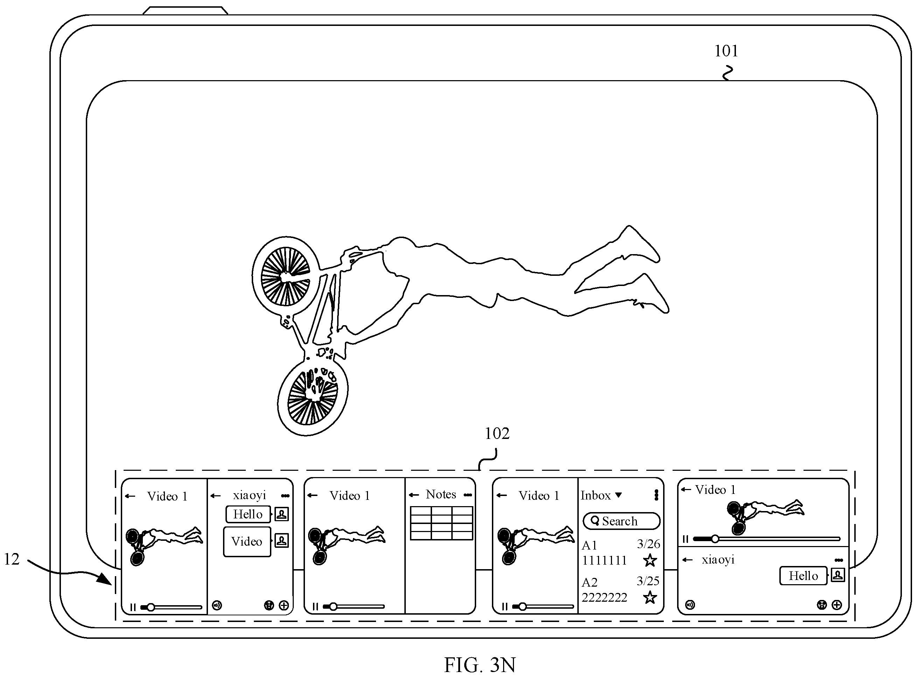

In some examples, after detecting an operation (for example, pressing and holding a multi-window entry in the recommendation bar 102 and releasing the multi-window entry at a location of another multi-window entry) in which the user indicates to move the multi-window entry in the recommendation bar 102 shown in FIG. 3H, the tablet computer may display the user interface 12 shown as an example in FIG. 3N. Therefore, locations of the multi-window entries in the recommendation bar 102 may be exchanged, so that the user can flexibly update the recommendation bar 102.

For ease of description, the following continues to use the recommendation bar 102 shown in FIG. 3B as an example for description in this application.

In some examples, after detecting an operation (for example, tapping a multi-window entry in the recommendation bar 102) in which the user indicates to trigger the multi-window entry in the recommendation bar 102 shown in FIG. 3B, the tablet computer may determine a multi-window display manner.

A display manner of the multi-window entry is a vertical split-screen manner. An example in which a recommended application herein is a chat application is used for description. In some implementations, the tablet computer may keep the multi-window display manner consistent with the display manner of the multi-window entry.

When the display manner of the multi-window entry is the vertical split-screen manner, the tablet computer may determine that the multi-window display manner is the vertical split-screen manner.

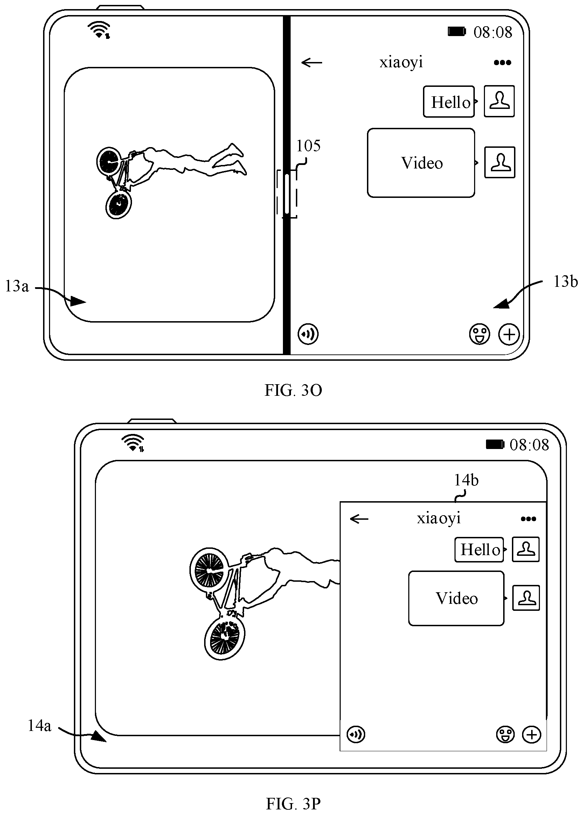

For example, the tablet computer may display user interfaces 13a and 13b shown as examples in FIG. 3O. The user interfaces 13a and 13b are user interfaces of a video application and a chat application that are presented in the vertical split-screen manner. On the user interface 13a, a video 1 is played on a left split screen. In addition, on the user interface 13b, a chat page is displayed on a right side of a right split screen.

In some implementations, the tablet computer may adaptively adjust the multi-window display manner based on a presentation status of the tablet computer.

The presentation status of the tablet computer may be understood as whether a current presentation status of the tablet computer is a support state or a tile state. Different presentation statuses of the tablet computer are applicable to different multi-window display manners. For example, the support state corresponds to a horizontal split-screen manner, and the tile state corresponds to a vertical split-screen manner or a floating-window manner.

When the tablet computer is in the tile state, the tablet computer may determine that the multi-window display manner is the vertical split-screen manner, for example, the user interfaces 13a and 13b shown in FIG. 3O.

Alternatively, the tablet computer may determine that the multi-window display manner is the floating-window manner. For example, the tablet computer may display user interfaces 14a and 14b shown as examples in FIG. 3P. The user interfaces 14a and 14b are user interfaces of the video application and the chat application that are presented in the floating-window manner. On the user interface 14a, the video 1 is played in full screen. In addition, on the user interface 14b, a chat page is displayed in a floating manner.

When the tablet computer is in the support state, the tablet computer may determine that the multi-window display manner is the horizontal split-screen manner.

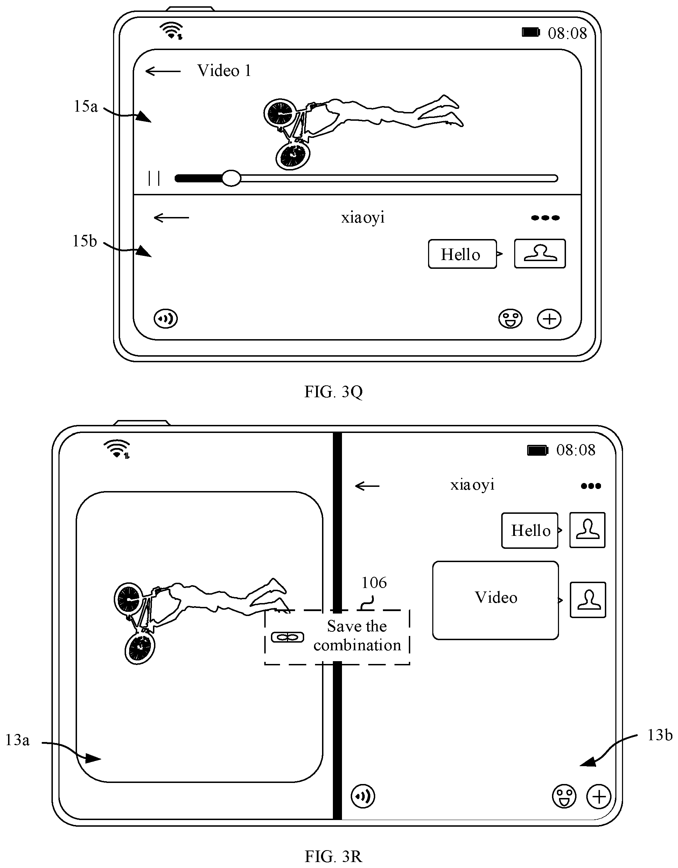

For example, the tablet computer may determine that the multi-window display manner is the horizontal split-screen manner. Therefore, the tablet computer may display user interfaces 15a and 15b shown as examples in FIG. 3Q. The user interfaces 15a and 15b are user interfaces of the video application and the chat application that are presented in the horizontal split-screen manner. On the user interface 15a, the video 1 is played on an upper split screen. In addition, on the user interface 15b, the chat page is displayed on a right side of a lower split screen.

For example, the multi-window display manner is further related to at least one of a display manner supported by the tablet computer, a display manner supported by the video application, and a display manner supported by the chat application.

In some examples, if the tablet computer supports the vertical split-screen manner, and the chat application and the video application support the vertical split-screen manner, the tablet computer may determine that the multi-window display manner is the vertical split-screen manner.

If the tablet computer does not support the vertical split-screen manner, and/or the chat application and/or the video application do/does not support the vertical split-screen manner, the tablet computer may determine that the multi-window display manner is not the vertical split-screen manner.

In some examples, if the tablet computer supports the horizontal split-screen manner, and the chat application and/or the video application support/supports the horizontal split-screen manner, the tablet computer may determine that the multi-window display manner is the horizontal split-screen manner.

If the tablet computer does not support the horizontal split-screen manner, and/or the chat application and/or the video application do/does not support the horizontal split-screen manner, the tablet computer may determine that the multi-window display manner is not the horizontal split-screen manner.

It should be understood that this application includes but is not limited to the foregoing manners of determining the multi-window display manner.

In addition, the tablet computer may further collect an operation on the recommendation bar 102, to prepare for subsequent recommendation of the multi-window entry.

For example, the tablet computer displays a multi-window entry 1 and a multi-window entry 2 of the video application in the recommendation bar 102.

If the user selects the multi-window entry 1, when starting the video application next time, the electronic device may continue to recommend the multi-window entry 1.

If the user does not select the multi-window entry 1 but selects the multi-window entry 2, when starting the video application next time, the electronic device may not recommend the multi-window entry 1, but recommend the multi-window entry 2.

If the user slides the recommendation bar 102, and a multi-window entry 3 is displayed in the recommendation bar 102, when starting the video application next time, the electronic device may not recommend the multi-window entry 1, but recommend the multi-window entry 3.

If the user does not perform selection and does not slide, when starting the video application next time, the electronic device may continue to recommend the multi-window entry 1.

For ease of description, the following uses the user interfaces 13a and 13b shown in FIG. 3O as an example for description in this application.

In FIG. 3O, the user interfaces 13a and 13b further include a control 105. The control 105 is configured to trigger creation of multi-window entries corresponding to the user interfaces 13a and 13b.

Parameters such as a display location, a shape, and a size of the control 105 are not limited in this application. In addition, the control 105 is further configured to adjust region sizes of the left split screen and the right split screen.

The multi-window entries corresponding to the user interfaces 13a and 13b may be used to trigger presentation of the user interfaces 13a and 13b. In addition, the multi-window entries corresponding to the user interfaces 13a and 13b may be changed, and changed multi-window entries may be further used to trigger presentation of user interfaces other than the user interfaces 13a and 13b.

For example, other user interfaces may include at least one user interface in other user interfaces of the video application and the chat application, the user interface of the video application, the user interface of the chat application, user interfaces of the video application and another application, user interfaces of the chat application and another application, a user interface of another application related to the video application, or a user interface of another application related to the chat application.

In some examples, after detecting an operation (for example, pressing and holding the control 105) in which the user indicates to trigger creation of the multi-window entries corresponding to the user interfaces 13a and 13b in FIG. 3O, the tablet computer may display a control 106 on the user interfaces 13a and 13b shown as examples in FIG. 3R, and the control 106 is configured to save the user interfaces 13a and 13b, to create the multi-window entries corresponding to the user interfaces 13a and 13b. Parameters such as a display location, a shape, and a size of the control 106 are not limited in this application.

In some examples, after detecting an operation (for example, tapping the control 106) in which the user indicates to trigger creation of the multi-window entries corresponding to the user interfaces 13a and 13b in FIG. 3R, the tablet computer may create the multi-window entries corresponding to the user interfaces 13a and 13b.

A display manner of the multi-window entries may be related to a multi-window display manner of the user interfaces 13a and 13b, and/or region sizes of the user interfaces 13a and 13b.

For example, the display manner of the multi-window entries corresponding to the user interfaces 13a and 13b may be consistent with the multi-window display manner of the user interfaces 13a and 13b.

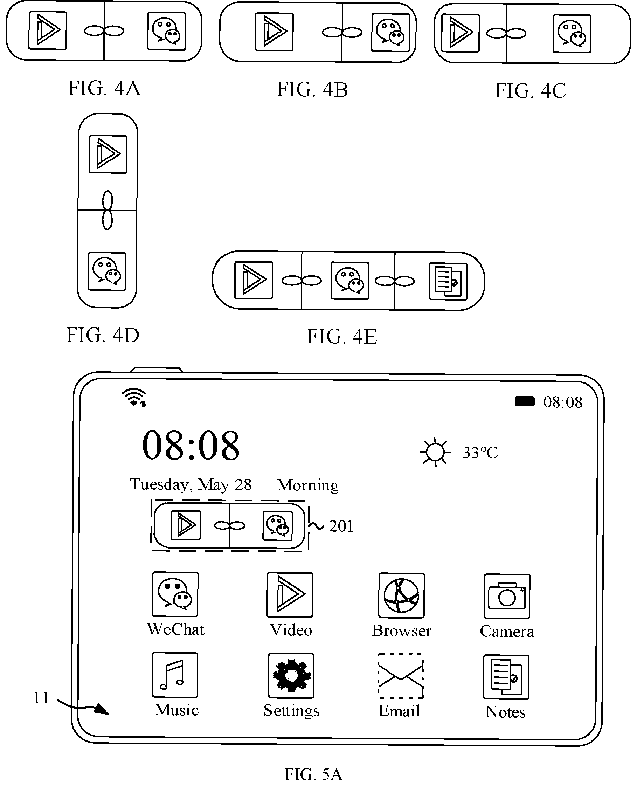

With reference to FIG. 4A to FIG. 4E, the following describes in detail the multi-window entries corresponding to the user interfaces 13a and 13b.

FIG. 4A to FIG. 4E are diagrams of a multi-window entry corresponding to a user interface according to an embodiment of this application.

When the multi-window display manner of the user interfaces 13a and 13b is the vertical split-screen manner, the multi-window entries corresponding to the user interfaces 13a and 13b may use controls shown in any one of FIG. 4A to FIG. 4C.

In addition, when the display manner of the multi-window entries is the vertical split-screen manner, region sizes of a left split screen and a right split screen of the multi-window entry may be kept in a same proportion as the region sizes between the user interfaces 13a and 13b.

For example, if the region size of the user interface 13a is equal to the region size of the user interface 13b, controls shown in FIG. 4A are used for the multi-window entries corresponding to the user interfaces 13a and 13b.

For another example, if the region size of the user interface 13a is greater than the region size of the user interface 13b, controls shown in FIG. 4B are used for the multi-window entries corresponding to the user interfaces 13a and 13b.

For another example, if the region size of the user interface 13a is smaller than the region size of the user interface 13b, controls shown in FIG. 4C are used for the multi-window entries corresponding to the user interfaces 13a and 13b.

When the multi-window display manner of the user interfaces 13a and 13b is the horizontal split-screen manner, the multi-window entries corresponding to the user interfaces 13a and 13b may use controls shown in FIG. 4D.

In addition, when the display manner of the multi-window entries is the horizontal split-screen manner, region sizes of an upper split screen and a lower split screen of the multi-window entry may be kept in a same proportion as the region sizes between the user interfaces 13a and 13b.

When the multi-window display manner of the user interfaces 13a and 13b is the three-split-screen manner, the multi-window entries corresponding to the user interfaces 13a and 13b may use controls shown in FIG. 4E.

It should be understood that, in addition to the foregoing controls, the display manner of multi-window entries corresponding to the user interfaces 13a and 13b may alternatively be irrelevant to the multi-window display manner of the user interface 13.

For example, the multi-window entries corresponding to the user interfaces 13a and 13b may use one floating bubble. For example, an icon of the floating bubble may be a pattern obtained after icons of the video application and the chat application are superimposed. Alternatively, the icon of the floating bubble may use a preset pattern.

For another example, the multi-window entries corresponding to the user interfaces 13a and 13b may use one card.

For another example, the multi-window entries corresponding to the user interfaces 13a and 13b may use one control.

For another example, the multi-window entries corresponding to the user interfaces 13a and 13b may use one option on one user interface.

After creating the multi-window entries corresponding to the user interfaces 13a and 13b, the tablet computer may display, in a plurality of manners, the multi-window entries corresponding to the created user interfaces 13a and 13b.

For example, the tablet computer may display the multi-window entries of the user interfaces 13a and 13b at one or more locations such as a home screen, a leftmost screen, a notification center, and a control center.

The following describes in detail the multi-window entries corresponding to the user interfaces 13a and 13b with reference to FIG. 5A to FIG. 5H by using an example in which the multi-window entries corresponding to the user interfaces 13a and 13b use the controls shown in FIG. 4A.

FIG. 5A to FIG. 5H are diagrams of human-computer interaction interfaces according to an embodiment of this application. For ease of description, in FIG. 5A to FIG. 5H, an example in which the electronic device is a tablet computer is used for illustration.

In some examples, after creating the multi-window entries corresponding to the user interfaces 13a and 13b, the tablet computer may display a user interface 11 shown as an example in FIG. 5A.

In comparison with the user interface 11 shown in FIG. 3A, the user interface 11 shown in FIG. 5A further includes a control 201. The control 201 may be used to trigger presentation of the user interfaces 13a and 13b.

In addition, in some examples, the control 201 may be further used to trigger the presentation of the user interfaces 13a and 13b. The control 201 is further used to trigger presentation of another user interface other than the user interfaces 13a and 13b.

Because of diversity of operations of triggering the control 201, the tablet computer may use one operation or a plurality of combined operations to present, by using a component 202, a user interface that can be provided.

For example, the control 201 may be used to trigger the presentation of the user interfaces 13a and 13b by default. In this case, after detecting an operation (for example, tapping the control 201) in which the user indicates to trigger the presentation of the user interfaces 13a and 13b in FIG. 5A, the tablet computer may display the user interfaces 13a and 13b shown in FIG. 3O.

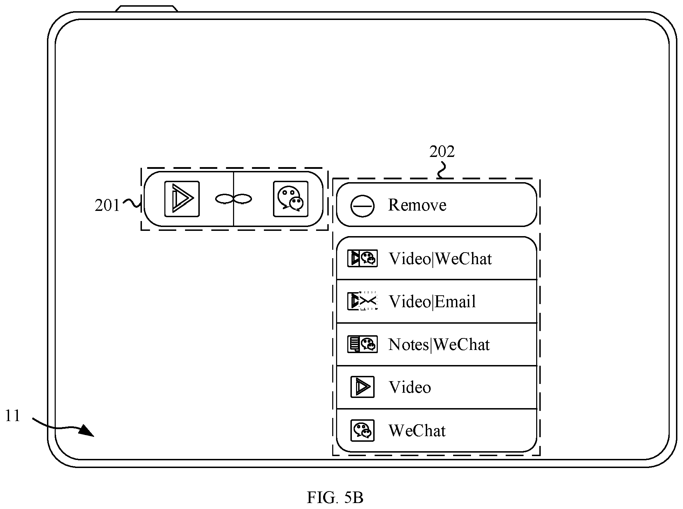

For another example, after detecting an operation (for example, an operation of tapping/pressing and holding the control 201) in which the user indicates to trigger presentation of more user interfaces in FIG. 5A, the tablet computer may display the control 201 and the component 202 on the user interface 11 shown as an example in any one of FIG. 5B to FIG. 5D.

In FIG. 5B to FIG. 5D, the component 202 includes options used to present the user interfaces 13a and 13b.

In addition, the component 202 further includes an option used to present another user interface other than the user interfaces 13a and 13b.

In addition, the component 202 further includes an option for removing the control 201.

In addition, the component 202 further includes an option for updating the user interface.

In addition, the component 202 further includes an option for displaying more user interfaces.

In some examples, display content of the component 202 does not vary with a trigger location of the control 201.

For example, when detecting an operation of triggering any region of the control 201 by the user, the tablet computer may display the control 201 and the component 202 on the user interface 11 shown as an example in any one of FIG. 5B to FIG. 5D.

In some examples, the user interface provided by the component 202 varies with the trigger location of the control 201. In other words, a combination order and/or a priority order of the multi-window entry provided by the tablet computer to the user are/is different.

The following uses an example in which a display region of the control 201 may be divided into a central region, a left region, and a right region for description.

For example, when detecting an operation of triggering the central region of the control 201 by the user, the tablet computer may display the control 201 and the component 202 on the user interface 11 shown as an example in FIG. 5B. In FIG. 5B, the component 202 includes options used to present the user interfaces 13a and 13b, and options used to present user interfaces related to the video application and the chat application.

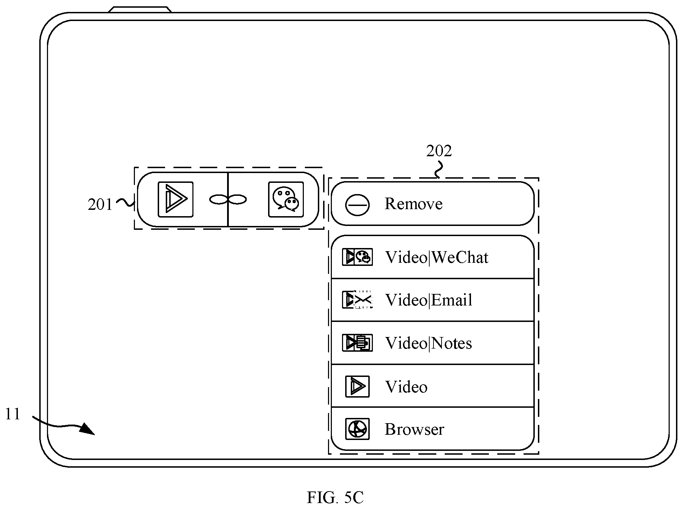

For another example, when detecting an operation of triggering the left region of the control 201 by the user, because an icon of the video application is displayed in the left region, the tablet computer may display the control 201 and the component 202 on the user interface 11 shown as an example in FIG. 5C. In FIG. 5C, the component 202 includes the options used to present the user interfaces 13a and 13b, and options used to present the user interface related to the video application.

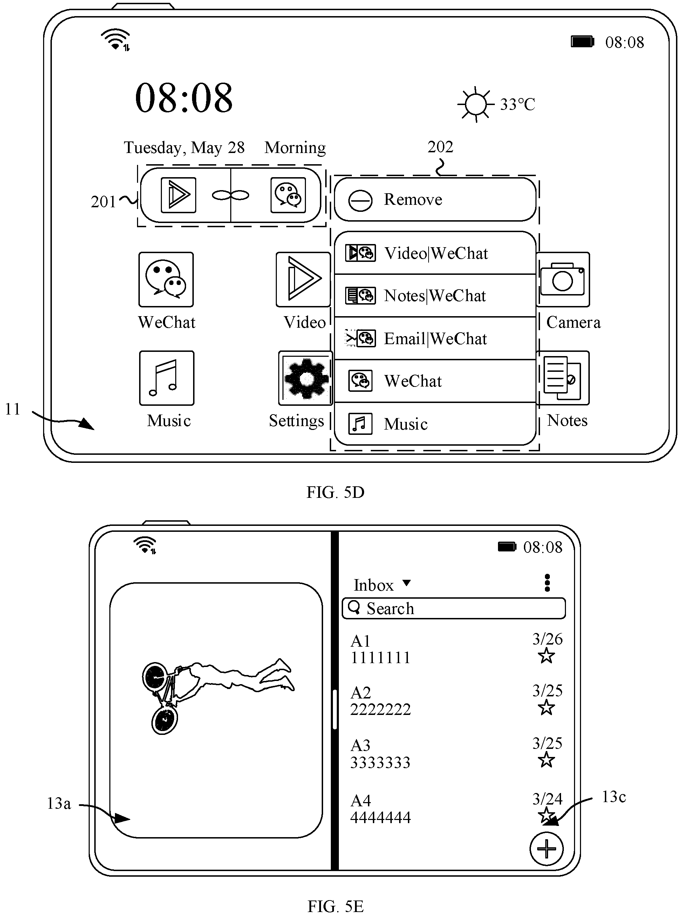

For another example, when detecting an operation of triggering the right region of the control 201 by the user, because an icon of the chat application is displayed in the right region, the tablet computer may display the control 201 and the component 202 on the user interface 11 shown as an example in FIG. 5D. In FIG. 5D, the component 202 includes the options used to present the user interfaces 13a and 13b, and options used to present the user interfaces related to the video application and the chat application.

In addition, when the tablet computer does not receive an operation on the component 202 after duration 2, the tablet computer may actively hide the component 202, that is, may not continue to display the component 202.

It should be understood that this application may include but is not limited to the foregoing component 202.

Based on the foregoing description, the user may select, from the component 202, an option of a user interface that the user wants to present.

For ease of description, an example in which user interfaces selected by the user for presentation are the user interfaces 13a and 13b is used for illustration.

In some examples, after the user selects the option of the user interface to be presented, the tablet computer may determine that the user wants to display the user interfaces 13a and 13b shown in FIG. 3O, and display the user interfaces 13a and 13b shown in FIG. 3O.

In some examples, after the user selects the option of the user interface to be presented, the tablet computer may determine that the user wants to display the user interfaces 13a and 13b shown in FIG. 3O. When detecting an operation of tapping the control 201 again by the user, the tablet computer may display the user interfaces 13a and 13b shown in FIG. 3O.

In addition, after the user selects the option of the user interface to be presented, in the component 202, the option used to present the user interface may be displayed in a range closer to a user tap range or an implementation range. For example, the option may be located above an option used to present another user interface.

In addition, the control 201 may be further configured to update display content of the component 202.

In some examples, when detecting an operation of double-clicking the control 201 and dragging the control 201 to a preset region 4 of the display by the user, the tablet computer may update the display content of the component 202.

In some examples, when detecting an operation of pressing and holding or tapping the control 201 by the user, the tablet computer may display the control 201 and the component 202 on the user interface 11 shown as an example in any one of FIG. 5B to FIG. 5D. When detecting an operation of sliding leftwards or rightwards in the component 202 by the user, the tablet computer may update the display content of the component 202.

In addition, the control 201 may be further configured to perform removal.

In some examples, when detecting an operation of pressing and holding the control 201 and dragging the control 201 to a preset region 5 of the display by the user, the tablet computer may delete or remove the control 201.

In some examples, when detecting an operation of pressing and holding or tapping the control 201 by the user, the tablet computer may display the control 201 and the component 202 on the user interface 11 shown as an example in any one of FIG. 5B to FIG. 5D. When detecting an operation of selecting, by the user from the component 202, an option used to remove the control 201, the tablet computer may determine not to continue to display the control 201, and display the user interface 11 shown in FIG. 3A.

In addition, the control 201 may be further configured to replace an icon of the control 201 in real time based on changes of display content of the user interfaces 13a and 13b.

In some examples, after detecting an operation in which the user indicates to replace the display content of the user interface 13b shown in FIG. 3O, the tablet computer may display user interfaces 13a and 13c shown as examples in FIG. 5E.

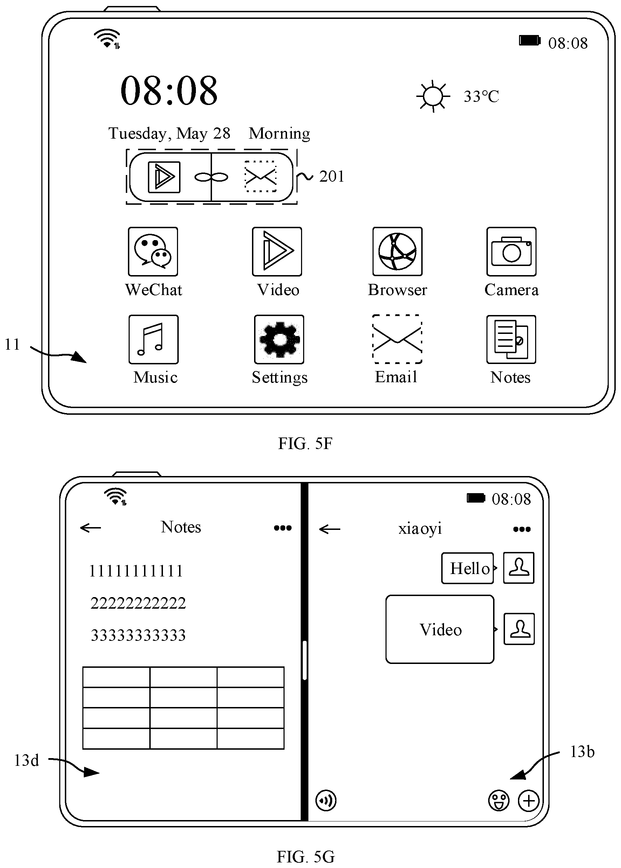

In comparison with the user interfaces 13a and 13b shown in FIG. 3O, display content of the user interfaces 13a and 13c shown in FIG. 5E changes. Correspondingly, the tablet computer may display the control 201 whose icon is updated on the user interface 11 shown as an example in FIG. 5F.

In some examples, after detecting an operation in which the user indicates to replace the display content of the user interface 13a shown in FIG. 3O, the tablet computer may display user interfaces 13d and 13b shown as examples in FIG. 5G.

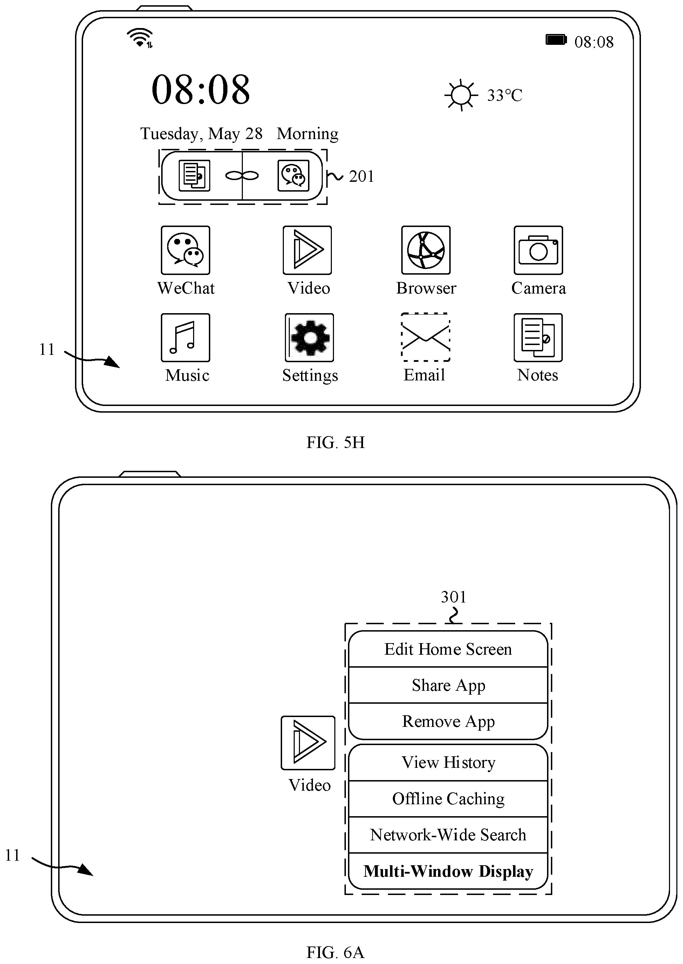

In comparison with the user interfaces 13a and 13b shown in FIG. 3O, display content of the user interfaces 13d and 13b shown in FIG. 5E changes. Correspondingly, the tablet computer may display the control 201 whose icon is updated on the user interface 11 shown as an example in FIG. 5H.

In some examples, the tablet computer may set the multi-window entries of the user interfaces 13a and 13b on a user interface used to edit the video application and/or the chat application. A user interface used to edit any application may be used to perform at least one of the following operations on the application: editing a home screen, sharing the application, removing the application, watching a historical video, enabling offline caching, or searching for or editing a multi-window entry of the application.

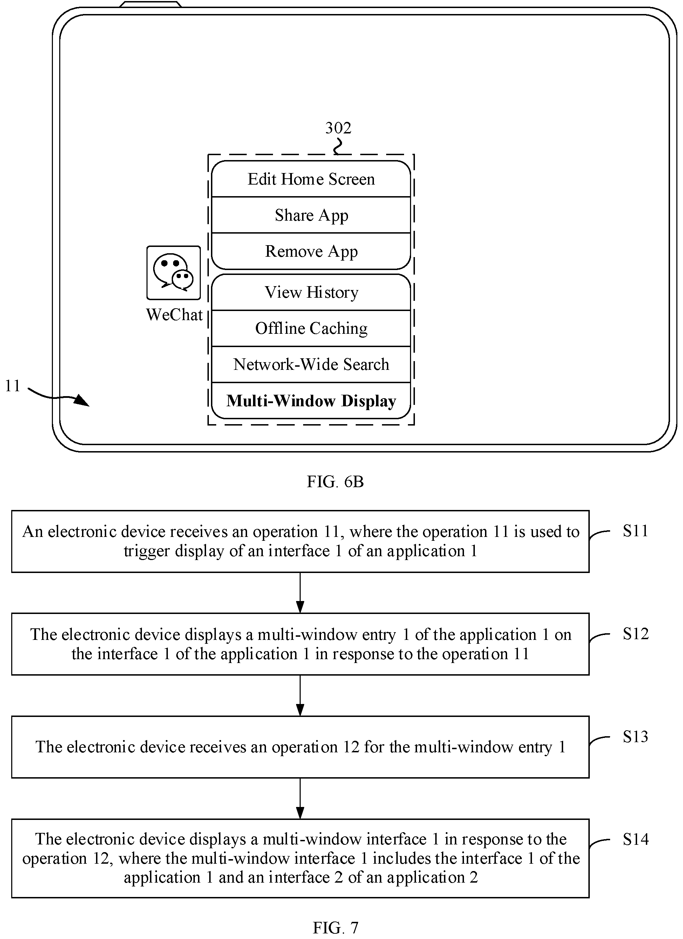

With reference to FIG. 6A and FIG. 6B, the following describes in detail the multi-window entries corresponding to the user interfaces 13a and 13b.

FIG. 6A and FIG. 6B are diagrams of human-computer interaction interfaces according to an embodiment of this application. For ease of description, in FIG. 6A and FIG. 6B, an example in which the electronic device is a tablet computer is used for illustration.

In some examples, after creating the multi-window entries corresponding to the user interfaces 13a and 13b, and detecting an operation (for example, pressing and holding an icon of the video application) in which the user indicates to trigger presentation of editing the video application in FIG. 3A, the tablet computer may display a name and an icon of the video application and a component 301 on the user interface 11 shown as an example in FIG. 6A.

In comparison with the user interface 11 shown in FIG. 3A, in addition to at least one option used to trigger editing on the home screen, sharing of the video application, removing of the video application, viewing of the historical video, enabling of the offline caching, and searching, the component 301 on the user interface 11 shown in FIG. 6A further includes an option used to trigger display of the user interface 13.

In some examples, after creating the multi-window entries corresponding to the user interfaces 13a and 13b, and detecting an operation (for example, pressing and holding an icon of the chat application) in which the user indicates to trigger presentation of editing the chat application in FIG. 3A, the tablet computer may display a name and an icon of the chat application and the component 301 on the user interface 11 shown as an example in FIG. 6A.

In comparison with the user interface 11 shown in FIG. 3A, in addition to at least one option used to trigger editing on the home screen, sharing of the chat application, removing of the chat application, viewing of the historical video, enabling of the offline caching, and searching, the component 302 on the user interface 11 shown in FIG. 6B further includes the option used to trigger display of the user interface 13.

Based on this, after detecting an operation (for example, tapping the option) in which the user indicates to trigger the option shown in FIG. 6A or FIG. 6B to trigger display of the user interface 13, the tablet computer may display the user interfaces 13a and 13b shown in FIG. 3O.

In addition, when the tablet computer does not receive an operation on the component 301 after duration 3, the tablet computer may actively hide the component 301, that is, may not continue to display the component 301.

In addition, the component 301 may include but is not limited to one or more options used to trigger display of a multi-window interface of a combination of the video application and a recommended application. In addition, editing may be performed on options in the component 301, for example, expanding, collapsing, hiding, moving, full presentation, adding, detail viewing, region size adjusting, option editing, deleting, updating, and replacing. Therefore, the component 301 is conveniently and flexibly used.

In addition, the tablet computer may sort the options in the component 301 based on saving time of the multi-window interface and one or more of a source, an occurrence moment, occurrence frequency, and confidence of the multi-window entry. Therefore, the tablet computer may display the component 301 on the user interface of the video application.

In conclusion, the tablet computer may display a multi-window entry of an application in a plurality of manners based on one or more factors of historical user behavior of the application, a current location of the tablet computer, or current time of the tablet computer. After detecting an operation of triggering the multi-window entry of the application by the user, the tablet computer may display a user interface of the application and a user interface of a recommended application in a form of multi-window. Therefore, a user interface that the user wants to open is recommended to the user by using the multi-window entry, so that interface content of the application running on the electronic device is enriched, and user experience is improved.

Based on the foregoing descriptions, with reference to FIG. 7 to FIG. 9, a working principle of the application multi-window presentation method in this application is described.

FIG. 7 is a flowchart of an application multi-window presentation method according to an embodiment of this application. As shown in FIG. 7, the application multi-window presentation method in this application may include the following steps.

S11: An electronic device receives an operation 11, where the operation 11 is used to trigger display of an interface 1 of an application 1.

The application 1 is any application in the electronic device, and the interface 1 is any user interface of the application 1.

An operation 12 may include but is not limited to operations such as tapping, double-tapping, pressing and holding, and sliding.

For example, the operation 11 may be any operation or a combined operation performed on an interface 2 of the application 1. The interface 2 of the application 1 includes entries such as a control, a component, and an option that are used to trigger display of the interface 1 of the application 1.

For another example, the operation 11 may be any one of the following operations: bending the electronic device, triggering a hardware button in the electronic device, and rotating the hardware button in the electronic device.

The electronic device may detect, by using a sensor like a gyroscope, whether the electronic device is bent.

S12: The electronic device displays a multi-window entry 1 of the application 1 on the interface 1 of the application 1 in response to the operation 11.

After receiving the operation 11, the electronic device may learn that the interface 1 of the application 1 needs to be displayed. In this case, the electronic device may display the multi-window entry 1 of the application 1 on the interface 1 of the application 1 based on one or more factors of historical user behavior of the application 1, a current location of the electronic device, or current time of the electronic device.

The multi-window entry 1 of the application 1 may be displayed on the interface 1 of the application 1 in a floating manner. Certainly, the multi-window entry 1 of the application 1 may alternatively be embedded in the interface 1 of the application 1. This is not limited in this application.

For the multi-window entry 1 of the application 1, refer to the foregoing descriptions of the multi-window entry of any application. In some examples, the multi-window entry 1 of the application 1 may be a multi-window entry of a video application.

S13: The electronic device receives an operation 12 for the multi-window entry 1.

The operation 12 may include but is not limited to operations such as tapping, double-tapping, pressing and holding, and sliding.

S14: The electronic device displays a multi-window interface 1 in response to the operation 12, where the multi-window interface 1 includes the interface 1 of the application 1, and displays an interface 2 of an application 2.

Therefore, the interface 1 of the application 1 and the interface 2 of the application 2 are displayed in a form of multi-window.

The application 2 may be the application 1, or may be an application other than the application 1.

The application 2 may be an application in the electronic device, or may be an application in another electronic device that can communicate with the electronic device.

The interface 2 is any user interface of the application 2.

The multi-window interface 1 may be displayed in a plurality of manners.

For example, the electronic device may display the interface 1 of the application 1 and the interface 2 of the application 2 on split screens.

For another example, the electronic device may display the interface 1 of the application 1 in full screen, and display the interface 2 of the application 2 in a floating window.

For another example, the electronic device may display the interface 2 of the application 2 in full screen, and display the interface 1 of the application 1 in a floating window.

In some examples, for the interface 1 of the application 1 and the interface 2 of the application 2, refer to the user interfaces 13a and 13b shown in FIG. 3O, the user interfaces 14a and 14b shown in FIG. 3P, or the user interfaces 15a and 15b shown in FIG. 3Q.

For specific implementations of S11 to S14, refer to the descriptions of FIG. 3A to FIG. 3Q. Details are not described herein again.

In this application, the electronic device may display, based on at least one parameter of historical user behavior of an application, the current location of the electronic device, or the current time of the electronic device, a multi-window entry of the application while displaying a user interface of the application. After receiving an operation for the multi-window entry of the application, the electronic device may display a multi-window interface including the application and a recommended application. Therefore, an interface that can be displayed in the form of multi-window can be directly recommended to a user by using the multi-window entry, so that the user can quickly find an application that the user is interested in and/or a user interface of the application. This increases application usage, and provides the user with a direct service applicable to a current scenario.

Based on the foregoing descriptions, in addition to displaying the multi-window entry 1 of the application 1, the electronic device may further display a multi-window entry 2 of the application 1 on the interface 1 of the application 1.

The multi-window entry 2 of the application 1 and the multi-window entry 1 of the application 1 are two multi-window entries. For any one of a display manner and display content of the multi-window entry 2 of the application 1, a recommended application, a display manner of a user interface displayed in the form of multi-window, and the user interface displayed in the form of multi-window, refer to the descriptions of the multi-window entry 1 of the application 1. Details are not described herein again.

Therefore, after receiving an operation 13 for the multi-window entry 2 of the application 1, the electronic device may display a multi-window interface 2. The multi-window interface 2 includes the interface 1 of the application 1 and an interface of an application 31. In this way, the interface 1 of the application 1 and the interface of the application 31 are displayed in the form of multi-window.

The operation 13 may include but is not limited to operations such as tapping, double-tapping, pressing and holding, and sliding.

The application 31 may be the application 1, or may be an application other than the application 1. The application 31 may be the application 2 may be an application other than the application 2.

The application 31 may be an application in the electronic device, or may be an application in another electronic device that can communicate with the electronic device.

The interface of the application 31 is any user interface of the application 31.

It should be understood that, for an application other than the application 1, the electronic device may display one or more multi-window entries different from the multi-window entry of the application 1. It can be learned that different applications correspond to different multi-window entries. Certainly, the electronic device may alternatively display a multi-window entry that is the same as the multi-window entry of the application 1. This is not limited in this application.

For a user interface other than the interface 1 of the application 1, the electronic device may display one or more multi-window entries different from the multi-window entry 1. It can be learned that different interfaces of a same application correspond to different multi-window entries. Certainly, the electronic device may alternatively display the multi-window entry 1. This is not limited in this application.

In addition, when displaying the interface 1 of the application 1, the electronic device may display one or two multi-window entries of the application 1, or may display three or more multi-window entries of the application 1. This is not limited in this application.

Certainly, the electronic device may display interfaces of two applications, or may display a plurality of interfaces of a same application, or may display interfaces of three or more applications. This is not limited in this application.

In addition, when the electronic device does not receive an operation for the multi-window entry 1 or the multi-window entry 2 of the application 1 after duration 1, the electronic device may not continue to display the multi-window entry 1 or the multi-window entry 2 of the application 1. The operation for the multi-window entry 1 or the multi-window entry 2 of the application 1 may include but is not limited to operations such as tapping, double-tapping, pressing and holding, and sliding on the multi-window entry 1 or the multi-window entry 2 of the application 1.

The multi-window entry of the application 1 may be displayed in a plurality of manners.

For example, the electronic device may display a recommendation bar on the interface 1 of the application 1. The recommendation bar may include the multi-window entry 1 of the application 1, the multi-window entry 1 of the application 1 and the multi-window entry 2 of the application 1, or the like.

A quantity of multi-window entries in the recommendation bar may be fixed or not fixed. The recommendation bar can trigger sliding to present the multi-window entry or cannot trigger sliding to present the multi-window entry.

For a specific implementation in which the multi-window entry of the application 1 is displayed in the recommendation bar, refer to the descriptions of the recommendation bar 102 mentioned in FIG. 3B to FIG. 3D and FIG. 3F.

In some examples, the recommendation bar may be located at a side edge of the interface 1 of the application 1, for example, at any one of the top, the bottom, a left side edge, and a right side edge of the application 1. For example, refer to the recommendation bar 102 mentioned in FIG. 3B to FIG. 3D. The recommendation bar may be displayed at the bottom of the application 1. Alternatively, refer to the recommendation bar 102 mentioned in FIG. 3F. The recommendation bar may be displayed at the right side edge of the application 1.

In some examples, the electronic device may provide, for the user, a function of editing the recommendation bar. For example, after receiving an operation 14 used to edit the recommendation bar, the electronic device may perform any one of the following operations on the recommendation bar: entry deleting, entry updating, entry viewing, entry adding, entry location moving, overall region enlarging, expanding, or hiding.

The entry deleting may be understood as deleting one or more existing multi-window entries in the recommendation bar. The entry updating may be understood as updating a multi-window entry in the recommendation bar. The entry viewing may be understood as viewing a multi-window entry in the recommendation bar. The entry adding may be understood as adding a new multi-window entry to the recommendation bar. The entry location moving may be understood as moving a location of an existing multi-window entry in the recommendation bar. The overall region enlarging may be understood as enlarging an overall display region of the recommendation bar. The expanding may be understood as a display state of the recommendation bar, where the recommendation bar changes from displaying a part of multi-window entries to displaying more multi-window entries. The hiding may be understood as another display state of the recommendation bar, where the recommendation bar may not be displayed.

The operation 14 may include but is not limited to operations such as tapping, double-tapping, pressing and holding, and sliding.

For a specific implementation of editing the recommendation bar, refer to the descriptions of FIG. 3B and FIG. 3H to FIG. 3N.

In addition, the electronic device further collects a tap operation and/or a slide operation in the recommendation bar. When the electronic device starts the application 1 next time, the electronic device may recommend one or more multi-window entries based on the tap operation and/or the slide operation in the recommendation bar and display priorities of the multi-window entries.

It should be understood that when the electronic device starts the application 1 next time, the electronic device may alternatively randomly recommend one or more multi-window entries.

For example, the electronic device may display the multi-window entry 1 of the application 1 on the interface 1 of the application 1 by using a floating bubble.

For a specific implementation in which the multi-window entry of the application 1 is displayed by using the floating bubble, refer to the descriptions of the recommendation bar 102 mentioned in FIG. 3E.

For example, the electronic device may display an interface of a dock on the interface 1 of the application 1. The interface of the dock may include the multi-window entry 1 of the application 1, the multi-window entry 1 of the application 1 and the multi-window entry 2 of the application 1, or the like.

For a specific implementation in which the multi-window entry of the application 1 is displayed on the interface of the dock, refer to the descriptions of the interface 103 of the dock mentioned in FIG. 3G.

After displaying the interface 1 of the application 1 and the interface 2 of the application 2, the electronic device may provide, for the user, a function of creating a multi-window entry 3.

The multi-window entry 3 may be used to trigger multi-window display of the interface 1 of the application 1 and the interface 2 of the application 2. In addition, the multi-window entry 3 may be further changed, and a changed multi-window entry may be used to trigger display of a user interface other than the interface 1 of the application 1 and the interface 2 of the application 2.

For example, the user interface may include at least one user interface in other user interfaces of the application 1 and the application 2, a user interface of the application 1, a user interface of the application 2, user interfaces of the application 1 and another application, user interfaces of the application 2 and another application, a user interface of another application related to the application 1, or a user interface of another application related to the application 2.

For the multi-window entry 3, refer to the descriptions of the multi-window entries corresponding to the user interfaces 13a and 13b.

In some examples, after receiving an operation 15, the electronic device may create the multi-window entry 3.

The operation 15 may include but is not limited to operations such as tapping, double-tapping, pressing and holding, and sliding. For example, the operation 15 may be an operation performed on a control 1 on the interface 1 of the application 1 and the interface 2 of the application 2. The control 1 is used to trigger creation of the multi-window entry 3. The control 1 may be a combined operation of the control 105 mentioned in FIG. 3O and the control 106 mentioned in FIG. 3R.

For a specific implementation of creating the multi-window entry 3, refer to the descriptions of FIG. 3O to FIG. 3R.

The electronic device may display the multi-window entry 3 in a plurality of manners.

For example, the electronic device may display the multi-window entry 3 on an interface of an application 32.

The application 32 is a system application of the electronic device, and the application 32 may be any application on a home screen, a leftmost screen, a control center, or a notification center.

For a specific implementation of the multi-window entry 3, refer to the descriptions of FIG. 4A to FIG. 4E. In some examples, the multi-window entry 3 may be the control 201 mentioned in FIG. 5A.

For a specific implementation of displaying the multi-window entry 3, refer to the descriptions of FIG. 3A and FIG. 5A.

Because a plurality of user interfaces are displayed through triggering of the multi-window entry 3, the electronic device may display one component on the interface of the application 32. The component is configured to display the user interfaces that can be displayed through triggering of the multi-window entry 3.

For the component, refer to the descriptions of the component 202 mentioned in FIG. 5B.

In some examples, the user interface provided by the component does not vary with a trigger location of the multi-window entry 3.

For a specific implementation of displaying the component, refer to the descriptions of any one of FIG. 5B to FIG. 5D.

In some examples, the user interface provided by the component varies with the trigger location of the multi-window entry 3.

A display region of the multi-window entry 3 may be divided into a region 1, a region 2, and a region 3, for example, a central region, a left region, and a right region of the component 202, or a central region, an upper region, and a lower region of the component 202.

When receiving an operation 161 on the region 1 of the multi-window entry 3, the electronic device may display the component. The component may be configured to provide options of user interfaces related to the application 1 and the application 2.

The operation 161 may include but is not limited to operations such as tapping, double-tapping, pressing and holding, and sliding.

For a specific implementation of displaying the component, refer to the descriptions of FIG. 5B.

When receiving an operation 162 on the region 2 of the multi-window entry 3, the electronic device may display the component. The component may be configured to provide an option of a user interface related to the application 1.

The operation 162 may include but is not limited to operations such as tapping, double-tapping, pressing and holding, and sliding.

For a specific implementation of displaying the component, refer to the descriptions of FIG. 5C.

When receiving an operation 163 on the region 3 of the multi-window entry 3, the electronic device may display the component. The component may be configured to provide an option of a user interface related to the application 2.

The operation 163 may include but is not limited to operations such as tapping, double-tapping, pressing and holding, and sliding.

For a specific implementation of displaying the component, refer to the descriptions of FIG. 5D.

It should be understood that this application may include but is not limited to displaying, by using the component, the user interface that is displayed through triggering of the multi-window entry 3.

Based on this, after receiving an operation 17 for the multi-window entry 3, the electronic device may display the interface 1 of the application 1 and the interface 2 of the application 2.

The operation 17 may include but is not limited to operations such as tapping, double-tapping, pressing and holding, and sliding.

For a specific implementation of displaying the interface 1 of the application 1 and the interface 2 of the application 2, refer to the descriptions of FIG. 5A and FIG. 3O.

In addition, after receiving an operation 18, the electronic device may change the multi-window entry 3 to a multi-window entry 4.

The operation 18 is used to change the multi-window entry 3. The operation 18 may include but is not limited to operations such as tapping, double-tapping, pressing and holding, and sliding.

The multi-window entry 4 and the multi-window entry 3 are two multi-window entries. Display manners, display locations, and display content of the two multi-window entries may be the same or different, provided that one or more of the following items are different: recommended applications corresponding to the two multi-window entries, display manners of user interfaces displayed in the form of multi-window, and the user interfaces displayed in the form of multi-window. In some examples, for the multi-window entry 4, refer to the descriptions of the control 201 mentioned in FIG. 5F. Alternatively, for the multi-window entry 4, refer to the descriptions of the control 201 mentioned in FIG. 5H.

In some examples, after receiving the operation 17, the electronic device may change from displaying the interface 1 of the application 1 and the interface 2 of the application 2 to displaying an interface of an application 33 and an interface of an application 34, and exit after displaying the interface of the application 33 and the interface of the application 34. In this way, the electronic device may change the multi-window entry 3 to the multi-window entry 4.

For a specific implementation of changing the multi-window entry 3, refer to the descriptions of FIG. 5E and FIG. 5F or FIG. 5G and FIG. 5H.

Therefore, after receiving an operation 19 for the multi-window entry 4, the electronic device may display the interface of the application 33 and the interface of the application 34.

The operation 19 may include but is not limited to operations such as tapping, double-tapping, pressing and holding, and sliding.

In some examples, the electronic device provides, for the user, a function of editing an option in the foregoing component. For example, after receiving an operation 164 performed by the user to edit an option in the component, the electronic device may perform any one of option deleting, option updating, option replacing, option viewing, option adding, option location moving, all-option expanding, option hiding, option display region enlarging, or option display region reducing on the option in the component.

The operation 164 may include but is not limited to operations such as tapping, double-tapping, pressing and holding, and sliding.

In addition, when the electronic device does not receive an operation for the component after duration 2, the electronic device may not continue to display the component. The operation for the component may include but is not limited to operations such as tapping, double-tapping, pressing and holding, or sliding the component.

In addition, options in the component may be arranged based on display priorities of the options. In some examples, an option with a higher display priority is displayed closer to a tapping range or an implementation range of the user than an option with a lower display priority.

In addition, the electronic device may further remove the multi-window entry 3 of the application 1.

In some examples, after receiving an operation 24 on the interface of the application 32, the electronic device may delete the multi-window entry 3 from the interface of the application 32.

The operation 24 may include but is not limited to operations such as tapping, double-tapping, pressing and holding, and sliding.

For a specific implementation of the foregoing content, refer to the descriptions of FIG. 5A to FIG. 5D and FIG. 3O. Details are not described herein again.

For example, the electronic device may display the multi-window entry 3 on an interface 3.

The interface 3 may be used to update or add the multi-window entry 3 of the application 1, and/or the interface 3 may be used to update or add the multi-window entry 3 of the application 2. The interface 3 may be a user interface of the application 1, or may be a user interface of the application 2, or may include a user interface of the application 1 and a user interface of the application 2.

For a specific implementation of the interface 3, refer to the foregoing descriptions of the user interface used to edit any application. In some examples, the interface 3 may be the component 301 displayed on the user interface 11 mentioned in FIG. 6A. Alternatively, the interface 3 may be the component 302 displayed on the user interface 11 mentioned in FIG. 6B.

In some examples, the electronic device may display an icon of the application 1 on an interface of an application 35. After receiving an operation 201 performed on the icon of the application 1, the electronic device may display the multi-window entry 3 of the application 1 on the interface 3.

The operation 201 may include but is not limited to operations such as tapping, double-tapping, pressing and holding, and sliding.

For a specific implementation of displaying the multi-window entry 3, refer to the descriptions of FIG. 6A.

In some examples, the electronic device may display an icon of the application 2 on an interface of an application 35. After receiving an operation 202 performed on the icon of the application 2, the electronic device may display the multi-window entry 3 of the application 2 on the interface 3.

The operation 202 may include but is not limited to operations such as tapping, double-tapping, pressing and holding, and sliding.

For a specific implementation of displaying the multi-window entry 3, refer to the descriptions of FIG. 6B.

The application 35 is a system application of the electronic device, and the application 35 may be any application on the home screen, the leftmost screen, the control center, or the notification center.

Based on this, after receiving an operation 203 for the multi-window entry 3, the electronic device may display the interface 1 of the application 1 and the interface 2 of the application 2.

The operation 203 may include but is not limited to operations such as tapping, double-tapping, pressing and holding, and sliding.

For a specific implementation of displaying the interface 1 of the application 1 and the interface 2 of the application 2, refer to the descriptions of FIG. 6A, FIG. 6B, and FIG. 3O.

In addition, the electronic device may further change the multi-window entry 3 on the interface 3.

In some examples, the electronic device may change the multi-window entry 3 on the interface 3 to the multi-window entry 4. In this way, after exiting the interface 3, and receiving the operation 19 for the multi-window entry 4, the electronic device may change from displaying the interface 1 of the application 1 and the interface 2 of the application 2 to displaying the interface of the application 33 and the interface of the application 34.

In addition, the electronic device may provide, for the user, a function of editing the multi-window entry 3. For example, after receiving an operation 203 used to edit the multi-window entry 3, the electronic device may perform any one of entry deleting, entry updating, entry replacing, entry viewing, entry adding, entry location moving, all-entry expanding, entry hiding, entry display region enlarging, or entry display region reducing on the multi-window entry 3.

The operation 203 may include but is not limited to operations such as tapping, double-tapping, pressing and holding, and sliding.

In addition, when the electronic device does not receive an operation 204 for the multi-window entry 3 on the interface 3 after duration 3, the electronic device may not continue to display the interface 3. The operation for the multi-window entry 3 may include but is not limited to operations such as tapping, double-tapping, pressing and holding, and sliding the interface 3.

The operation 204 may include but is not limited to operations such as tapping, double-tapping, pressing and holding, and sliding.

In addition, the multi-window entries on the interface 3 may be arranged based on saving time and/or display priorities of the multi-window entries. In some examples, a multi-window entry that is saved earlier is displayed closer to the tapping range or the implementation range of the user than a multi-window entry that is saved later.

In some examples, in a process of starting the application 1, the electronic device may perform the following steps:
Step A1: The electronic device may determine whether there is a multi-window entry predefined by the user for the application 1.

If there is the multi-window entry predefined by the user for the application 1, the electronic device may obtain the multi-window entry predefined by the user.

If there is no multi-window entry predefined by the user for the application 1, the electronic device may determine not to display the multi-window entry predefined by the user.

Step A2: The electronic device may determine whether a user interface recommended last time is displayed when the application 1 is used last time.

If the user interface recommended last time is displayed when the application 1 is used last time, the electronic device may obtain a multi-window entry recommended last time.

If the user interface recommended last time is not displayed when the application 1 is used last time, the electronic device may determine not to display the multi-window entry recommended last time.

Step A3: The electronic device may determine whether a user interface that is displayed in a form of multi-window and that is of the application 1 is saved.

If the user interface that is displayed in the form of multi-window and that is of the application 1 is saved, the electronic device may obtain a historically saved multi-window entry corresponding to the saved user interface.

If the user interface that is displayed in the form of multi-window and that is of the application 1 is not saved, the electronic device may determine not to display the historically saved multi-window entry.

Step A4: The electronic device may determine whether there is a user interface that has been used two consecutive times.

If there is the user interface that has been used two consecutive times, the electronic device may obtain a multi-window entry corresponding to the user interface that has been used two consecutive times.

If there is no user interface that has been used two consecutive times, the electronic device may determine not to display a multi-window entry that has been used two consecutive times.

Step A5: The electronic device may determine whether there are user interfaces that have been used together within preset duration.

If there are user interfaces that have been used together within the preset duration, the electronic device may obtain multi-window entries corresponding to the user interfaces that have been used together within the preset duration.

If there are no user interfaces that have been used together within the preset duration, the electronic device may determine not to display entries that have been used together within the preset duration.

In conclusion, the electronic device may prioritize the multi-window entries based on one or more of sources, occurrence moments, occurrence frequency, and confidence of the multi-window entries. Therefore, the electronic device displays one or more multi-window entries on the interface 1 of the application 1.

In some examples, priorities sorted in descending order are: the multi-window entry predefined by the user, the multi-window entry recommended last time, the historically saved multi-window entry corresponding to the user interface, and the multi-window entry corresponding to the user interface that has been used two consecutive times and the multi-window entries corresponding to the user interfaces that have been used together within the preset duration.

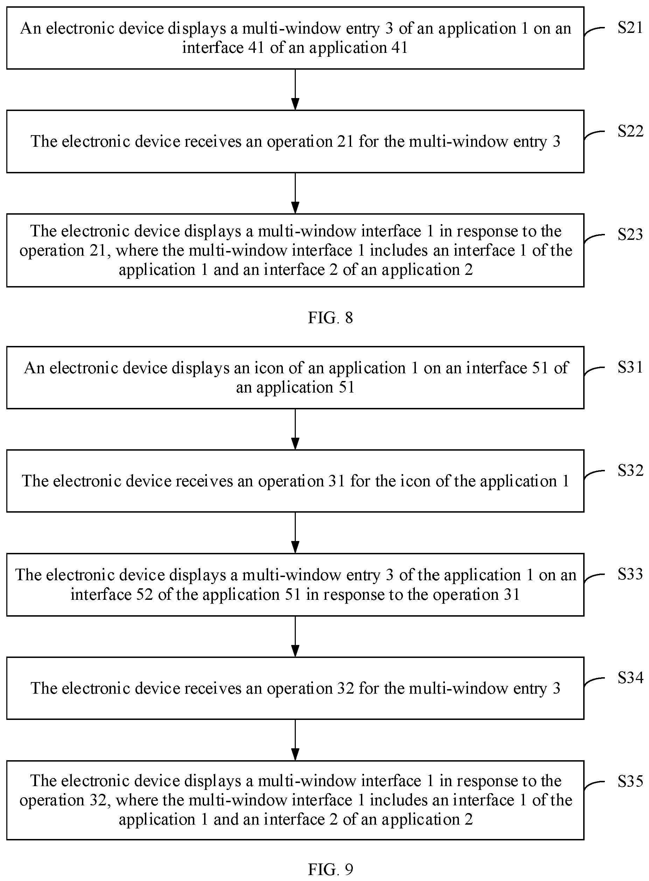

FIG. 8 is a flowchart of an application multi-window presentation method according to an embodiment of this application. As shown in FIG. 8, the application multi-window presentation method in this application may include the following steps.

S21: An electronic device displays a multi-window entry 3 of an application 1 on an interface 41 of an application 41.

The application 41 is a system application of the electronic device, and the application 41 may be any application on a home screen, a leftmost screen, a control center, or a notification center.

The application 1 is any application in the electronic device. The application 1 is different from the application 41.

In some examples, the multi-window entry 3 of the application 1 may be embedded in the interface 41 of the application 41.

For the multi-window entry 3 of the application 1, refer to the descriptions of the multi-window entry 3 mentioned in the embodiment shown in FIG. 7.

S22: The electronic device receives an operation 21 for the multi-window entry 3.

The operation 21 may include but is not limited to operations such as tapping, double-tapping, pressing and holding, and sliding.

S23: The electronic device displays a multi-window interface 1 in response to the operation 21, where the multi-window interface 1 includes an interface 1 of the application 1 and an interface 2 of an application 2.

An implementation of S23 is similar to that of S14 in the embodiment shown in FIG. 7. Details are not described herein again in this application.

In some examples, for the interface 1 of the application 1 and the interface 2 of the application 2, refer to the user interfaces 13a and 13b shown in FIG. 3O, the user interfaces 14a and 14b shown in FIG. 3P, or the user interfaces 15a and 15b shown in FIG. 3Q. Correspondingly, for specific implementations of S21 to S23, refer to descriptions of FIG. 5A and FIG. 3O to FIG. 3Q. Details are not described herein again.

In some examples, for the interface 1 of the application 1 and the interface 2 of the application 2, refer to the user interfaces 13a and 13c shown in FIG. 5E, or the user interfaces 13d and 13b shown in FIG. 5G. Correspondingly, for specific implementations of S21 to S23, refer to descriptions of FIG. 5F to FIG. 5E or FIG. 5H to FIG. 5G. Details are not described herein again.

In this application, the electronic device may display, based on at least one parameter of historical user behavior of an application, a current location of the electronic device, or current time of the electronic device, a multi-window entry of an application on a user interface of a system application. After receiving an operation for the multi-window entry of the application, the electronic device may display a multi-window interface including the application and a recommended application. Therefore, the multi-window interface can be directly recommended to the user by using the multi-window entry, so that the user can quickly find the application that the user is interested in and/or the user interface of the application. This increases application usage, and provides the user with a direct service applicable to a current scenario.

FIG. 9 is a flowchart of an application multi-window presentation method according to an embodiment of this application. As shown in FIG. 9, the application multi-window presentation method in this application may include the following steps.

S31: An electronic device displays an icon of an application 1 on an interface 51 of an application 51.

The application 51 is a system application of the electronic device, and the application 51 may be any application on a home screen, a leftmost screen, a control center, or a notification center.

The application 1 is any application in the electronic device. The application 1 is different from the application 51. In addition, the icon of the application 1 may be replaced with application information such as a name, a picture, a video, and a function component of the application 1.

S32: The electronic device receives an operation 31 for the icon of the application 1.

The operation 31 may include but is not limited to operations such as tapping, double-tapping, pressing and holding, and sliding.

S33: The electronic device displays a multi-window entry 3 of the application 1 on the interface 52 of the application 51 in response to the operation 31.

The interface 52 of the application 51 is used to provide a multi-window entry 3 of the application 1. In addition, the interface 52 of the application 51 is further used to perform at least one editing operation on the application 1: editing a home screen, sharing a chat application, removing a chat application, watching a historical video, enabling offline caching, or searching.

For the multi-window entry 3 of the application 1, refer to the descriptions of the multi-window entry 3 mentioned in the embodiment shown in FIG. 7.

The interface 52 of the application 51 is a user interface that is in the application 51 and that is different from the interface 51, or may be a region covering the interface 51 of the application 51. This is not limited in this application.

For example, the interface 51 of the application 51 is the user interface 11 mentioned in FIG. 6A and FIG. 6B, and the interface 52 of the application 51 may be the component 302 that is mentioned in FIG. 6A and FIG. 6B and that covers the user interface 11.

S34: The electronic device receives an operation 32 for the multi-window entry 3.

The operation 32 may include but is not limited to operations such as tapping, double-tapping, pressing and holding, and sliding.

S35: The electronic device displays a multi-window interface 1 in response to the operation 32, where the multi-window interface 1 includes an interface 1 of the application 1 and an interface 2 of an application 2.

An implementation of S35 is similar to that of S14 in the embodiment shown in FIG. 7. Details are not described herein again in this application.

For specific implementations of S31 to S35, refer to descriptions of FIG. 6A, FIG. 6B, and FIG. 3O to FIG. 3Q. Details are not described herein again.

In this application, the electronic device may display, based on at least one parameter of historical user behavior of an application, a current location of the electronic device, or current time of the electronic device, a multi-window entry of the application on a user interface that is of the application and that is used to edit the application. After receiving an operation for the multi-window entry of the application, the electronic device may display a multi-window interface including the application and a recommended application. Therefore, the multi-window interface can be directly recommended to the user by using the multi-window entry, so that the user can quickly find the application that the user is interested in and/or the user interface of the application. This increases application usage, and provides the user with a direct service applicable to a current scenario.

Based on some of the foregoing embodiments, the following describes an application multi-window presentation method provided in this application.

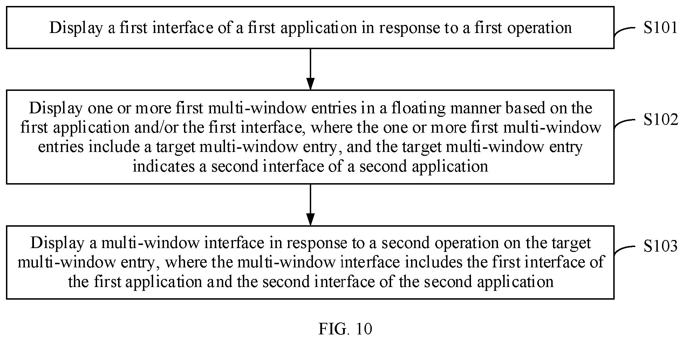

For example, FIG. 10 is a flowchart of an application multi-window presentation method according to an embodiment of this application. As shown in FIG. 10, the application multi-window presentation method in this application may include the following steps.

S101: Display a first interface of a first application in response to a first operation.

S102: Display one or more first multi-window entries in a floating manner based on the first application and/or the first interface, where the one or more first multi-window entries include a target multi-window entry, and the target multi-window entry indicates a second interface of a second application.

S103: Display a multi-window interface in response to a second operation on the target multi-window entry, where the multi-window interface includes the first interface of the first application and the second interface of the second application.

The application multi-window presentation method in this application may be performed by an electronic device. For a specific implementation of the electronic device, refer to the foregoing description content of the electronic device. Details are not described herein again.

For a specific implementation of the foregoing steps, refer to the descriptions of the embodiment shown in FIG. 7. Details are not described herein again.

In some examples, the method further includes:
displaying a third interface of a third application in response to a third operation, where the third application is different from the first application; and
displaying one or more second multi-window entries in a floating manner based on the third application, where the one or more second multi-window entries are different from the one or more first multi-window entries.

In some examples, the method further includes:
displaying a fourth interface of the first application in response to a fourth operation, where the fourth interface is different from the first interface; and
displaying one or more third multi-window entries in a floating manner based on the fourth interface, where the one or more third multi-window entries are different from the one or more first multi-window entries.

In some examples, the displaying a multi-window interface in response to a second operation on the target multi-window entry includes:
after the target multi-window entry is selected, displaying the multi-window interface in response to a mechanical operation of bending an electronic device; or
after the target multi-window entry is selected, displaying the multi-window interface in response to a mechanical operation of pressing a hardware button on an electronic device; or
displaying the multi-window interface in response to a screen touch operation of selecting the target multi-window entry.

In some examples, after the displaying the multi-window interface, the method further includes:
updating an interface of an application on the multi-window interface in response to a fifth operation.

In some examples, after the displaying the multi-window interface, the method further includes:
displaying a first control on the multi-window interface, where the first control triggers saving of the multi-window interface; and
in response to a sixth operation on the first control, adding the target multi-window entry to a fifth interface of a fourth application, and/or adding the target multi-window entry to a sixth interface of an application corresponding to the multi-window interface.

In some examples, the method further includes:
displaying, on the fifth interface of the fourth application, application information of the application corresponding to the multi-window interface; and
displaying, in response to a seventh operation on the application information of the application corresponding to the multi-window interface, a sixth interface of the application corresponding to the multi-window interface, where the sixth interface of the application corresponding to the multi-window interface includes the target multi-window entry.

In some examples, the fourth application includes any application on a home screen, a leftmost screen, a control center, or a notification center.

In some examples, the method further includes:
in response to an eighth operation, performing any one of entry deleting, entry updating, entry replacing, entry viewing, entry adding, entry location moving, all-entry expanding, entry hiding, entry display region enlarging, or entry display region reducing on the one or more first multi-window entries.

In some examples, the method further includes:
skipping displaying the one or more first multi-window entries after no operation of a user is received after first duration.

In some examples, the one or more first multi-window entries are located at a side edge and/or a bottom of the first interface of the first application

In some examples, when a plurality of multi-window entries include a first entry and a second entry, and a display priority of the first entry is higher than a display priority of the second entry, a display region of the first entry is closer to a screen touch region for the user than a display region of the second entry.

In some examples, a source of the multi-window entry includes at least one of the following:
a user-predefined multi-window entry; or
a multi-window entry that is previously recommended N times, where N is a positive integer; or
a historically saved multi-window entry; or
a multi-window entry that has been used M consecutive times, where M is a positive integer; or
a multi-window entry used within preset duration; or
a multi-window entry including a plurality of instances in a same application based on a current location and/or current time of the electronic device.

In some examples, a display form of the multi-window entry includes at least one of a control, a floating bubble, or a card.

In some examples, display content of the multi-window entry includes at least one of an application interface photo, an application icon, an application name, or a preset pattern.

In some examples, a display manner of the multi-window interface is related to a display manner of the target multi-window entry and/or a presentation status of the electronic device.

In some examples, the display manner of the multi-window interface is consistent with the display manner of the target multi-window entry.

For example, the application multi-window presentation method in this application may include the following steps.

Step 201: Display one or more multi-window entries on a first interface of a first application, where the one or more first multi-window entries include a target multi-window entry, and the target multi-window entry indicates a second application and a third application; and

Step 202: Display a multi-window interface in response to a first operation on the target multi-window entry, where the multi-window interface includes a second interface of the second application and a third interface of the third application.

The application multi-window presentation method in this application may be performed by an electronic device. For a specific implementation of the electronic device, refer to the foregoing description content of the electronic device. Details are not described herein again.

For a specific implementation of the foregoing steps, refer to the descriptions of the embodiment shown in FIG. 8. Details are not described herein again.

In some examples, when a display region of the target multi-window entry includes a first region, a second region, and a third region at different locations, the method further includes:
displaying a first editing interface in a floating manner based on the second application in response to a second operation on the first region, where the first editing interface includes a plurality of first options, and the plurality of first options indicate different interfaces of the second application and a fourth application; or
displaying a second editing interface in a floating manner based on the third application in response to a third operation on the second region, where the second editing interface includes a plurality of second options, and the plurality of second options indicate different interfaces of the third application and a fifth application; or
displaying a third editing interface in a floating manner based on the second application and/or the third application in response to a fourth operation on the third region, where the third editing interface includes a plurality of third options, and the plurality of third options indicate different interfaces of the second application and the third application.

In some examples, the method further includes:
selecting, in response to a fifth operation on an editing interface, a target interface indicated by an option on the editing interface; and
updating the target multi-window entry in response to a sixth operation of triggering exit of the editing interface, where an updated target multi-window entry indicates an application corresponding to the target interface.

In some examples, the method further includes:
in response to a seventh operation, performing any one of option deleting, option updating, option replacing, option viewing, option adding, option location moving, all-option expanding, option hiding, option display region enlarging, or option display region reducing on a plurality of options on the editing interface.

In some examples, the method further includes:
skipping displaying the editing interface after no operation of a user is received after second duration.

In some examples, when the plurality of options on the editing interface include a first option and a second option, and a display priority of the first option is higher than a display priority of the second option, a display region of the first option is closer to a screen touch region for the user than a display region of the second option.

In some examples, after the displaying the multi-window interface, the method further includes:
updating an interface of an application on the multi-window interface in response to an eighth operation; and
updating the target multi-window entry in response to a ninth operation of triggering exit of an updated multi-window interface, where an updated target multi-window entry indicates an application corresponding to the updated multi-window interface.

In some examples, the method further includes:
deleting the target multi-window entry from the first interface of the first application in response to a tenth operation on the target multi-window entry.

In some examples, a display form of the multi-window entry includes at least one of a control, a floating bubble, or a card. Therefore, a plurality of possibilities are provided for the display form of the multi-window entry, and the display form of the multi-window entry is enriched.

In some examples, display content of the multi-window entry includes at least one of an application interface photo, an application icon, an application name, or a preset pattern.

In some examples, a display manner of the multi-window interface is related to a display manner of the target multi-window entry and/or a presentation status of the electronic device.

In some examples, the display manner of the multi-window interface is consistent with the display manner of the target multi-window entry.

In some examples, the first application includes any application on a home screen, a leftmost screen, a control center, or a notification center.

For example, the application multi-window presentation method provided in this application may include the following steps.

Step 301: Display application information of a second application on a first interface of a first application.

Step 302: Display one or more first multi-window entries in a floating manner in response to a first operation on the application information of the second application, where the one or more first multi-window entries include a target multi-window entry, and the target multi-window entry indicates a third interface of a third application.

Step 303: Display a multi-window interface in response to a second operation on the target multi-window entry, where the multi-window interface includes a second interface of the second application and a third interface of the third application.

The application multi-window presentation method in this application may be performed by an electronic device. For a specific implementation of the electronic device, refer to the foregoing description content of the electronic device. Details are not described herein again.

For a specific implementation of the foregoing steps, refer to the descriptions of the embodiment shown in FIG. 9. Details are not described herein again.

In some examples, after the displaying the multi-window interface, the method further includes:
updating an interface of an application on the multi-window interface in response to a third operation; and
updating the target multi-window entry in response to a fourth operation of triggering exit of an updated multi-window interface, where an updated target multi-window entry indicates an application corresponding to the updated multi-window interface.

In some examples, the method further includes:
in response to a fifth operation, performing any one of entry deleting, entry updating, entry replacing, entry viewing, entry adding, entry location moving, all-entry expanding, entry hiding, entry display region enlarging, or entry display region reducing on the one or more multi-window entries.

In some examples, the method further includes:
skipping displaying the one or more first multi-window entries after no operation of a user is received after third duration.

In some examples, when a plurality of multi-window entries include a first entry and a second entry, and saving time of the first entry is earlier than saving time of the second entry, a display region of the first entry is closer to a screen touch region for the user than a display region of the second entry.

In some examples, display content of the multi-window entry includes at least one of an application interface photo, an application icon, an application name, or a preset pattern.

In some examples, the first application includes any application on a home screen, a leftmost screen, a control center, or a notification center.

For example, this application provides an electronic device, including a memory and a processor. The memory is configured to store a computer-executable program or instructions. The processor is configured to invoke the computer-executable program or the instructions in the memory, so that the electronic device performs the method in the foregoing embodiments.

For example, this application provides a chip system. The chip system is used in an electronic device including a memory, a display, and a sensor. The chip system includes a processor. When the processor executes a computer-executable program or instructions stored in the memory, the electronic device implements the method in the foregoing embodiments.

For example, this application provides a computer-readable storage medium. The computer-readable storage medium stores a computer-executable program or instructions. When the computer-executable program or the instructions are executed by a processor, an electronic device implements the method in the foregoing embodiments.

For example, this application provides a computer program product, including execution instructions. The execution instructions are stored in a readable storage medium, and at least one processor of an electronic device may read the execution instructions from the readable storage medium. The at least one processor executes the execution instructions, so that the electronic device implements the method in the foregoing embodiments.

In the foregoing embodiments, all or some of the functions may be implemented by using software, hardware, or a combination of software and hardware. When software is used to implement embodiments, all or some of embodiments may be implemented in a form of computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, DVD), a semiconductor medium (for example, a solid-state disk (Solid-State Disk, SSD)), or the like.

A person of ordinary skill in the art may understand that all or some of the procedures of the methods in embodiments may be implemented by a computer program instructing relevant hardware. The program may be stored in a computer-readable storage medium. When the program is run, the procedures of the methods in embodiments are performed. The foregoing storage medium includes any medium that can store program code, for example, a read-only memory (read-only memory, ROM), a random access memory (random access memory, RAM), a magnetic disk, or an optical disc.

## Claims

1. An application multi-window presentation method, wherein the method comprises:
displaying a first interface of a first application in response to a first operation;
displaying one or more first multi-window entries in a floating manner based on the first application and/or the first interface, wherein the one or more first multi-window entries comprise a target multi-window entry, and the target multi-window entry indicates a second interface of a second application; and
displaying a multi-window interface in response to a second operation on the target multi-window entry, wherein the multi-window interface comprises the first interface of the first application and the second interface of the second application.

2. The method according to claim 1, wherein the method further comprises:
displaying a third interface of a third application in response to a third operation, wherein the third application is different from the first application; and
displaying one or more second multi-window entries in a floating manner based on the third application, wherein the one or more second multi-window entries are different from the one or more first multi-window entries.

3. The method according to claim 1 or 2, wherein the method further comprises:
displaying a fourth interface of the first application in response to a fourth operation, wherein the fourth interface is different from the first interface; and
displaying one or more third multi-window entries in a floating manner based on the fourth interface, wherein the one or more third multi-window entries are different from the one or more first multi-window entries.

4. The method according to any one of claims 1 to 3, wherein the displaying a multi-window interface in response to a second operation on the target multi-window entry comprises:
after the target multi-window entry is selected, displaying the multi-window interface in response to a mechanical operation of bending an electronic device; or
after the target multi-window entry is selected, displaying the multi-window interface in response to a mechanical operation of pressing a hardware button on an electronic device; or
displaying the multi-window interface in response to a screen touch operation of selecting the target multi-window entry.

5. The method according to any one of claims 1 to 4, wherein after the displaying the multi-window interface, the method further comprises:
updating an interface of an application on the multi-window interface in response to a fifth operation.

6. The method according to any one of claims 1 to 5, wherein after the displaying the multi-window interface, the method further comprises:
displaying a first control on the multi-window interface, wherein the first control triggers saving of the multi-window interface; and
in response to a sixth operation on the first control, adding the target multi-window entry to a fifth interface of a fourth application, and/or adding the target multi-window entry to a sixth interface of an application corresponding to the multi-window interface.

7. The method according to claim 6, wherein the method further comprises:
displaying, on the fifth interface of the fourth application, application information of the application corresponding to the multi-window interface; and
displaying, in response to a seventh operation on the application information of the application corresponding to the multi-window interface, a sixth interface of the application corresponding to the multi-window interface, wherein the sixth interface of the application corresponding to the multi-window interface comprises the target multi-window entry.

8. The method according to claim 6 or 7, wherein the fourth application comprises any application on a home screen, a leftmost screen, a control center, or a notification center.

9. The method according to any one of claims 1 to 8, wherein the method further comprises:
in response to an eighth operation, performing any one of entry deleting, entry updating, entry replacing, entry viewing, entry adding, entry location moving, all-entry expanding, entry hiding, entry display region enlarging, or entry display region reducing on the one or more first multi-window entries.

10. The method according to any one of claims 1 to 9, wherein the method further comprises:
skipping displaying the one or more first multi-window entries after no operation of a user is received after first duration.

11. The method according to any one of claims 1 to 10, wherein the one or more first multi-window entries are located at a side edge and/or a bottom of the first interface of the first application.

12. The method according to any one of claims 1 to 11, wherein when a plurality of multi-window entries comprise a first entry and a second entry, and a display priority of the first entry is higher than a display priority of the second entry, a display region of the first entry is closer to a screen touch region for the user than a display region of the second entry.

13. The method according to any one of claims 1 to 12, wherein a source of the multi-window entry comprises at least one of the following:
a user-predefined multi-window entry; or
a multi-window entry that is previously recommended N times, wherein N is a positive integer; or
a historically saved multi-window entry; or
a multi-window entry that has been used M consecutive times, wherein M is a positive integer; or
a multi-window entry used within preset duration; or
a multi-window entry comprising a plurality of instances in a same application based on a current location and/or current time of the electronic device.

14. The method according to any one of claims 1 to 13, wherein a display form of the multi-window entry comprises at least one of a control, a floating bubble, or a card.

15. The method according to any one of claims 1 to 14, wherein display content of the multi-window entry comprises at least one of an application interface photo, an application icon, an application name, or a preset pattern.

16. The method according to any one of claims 1 to 15, wherein a display manner of the multi-window interface is related to a display manner of the target multi-window entry and/or a presentation status of the electronic device.

17. The method according to claim 16, wherein the display manner of the multi-window interface is consistent with the display manner of the target multi-window entry.

18. An application multi-window presentation method, wherein the method comprises:
displaying one or more multi-window entries on a first interface of a first application, wherein the one or more first multi-window entries comprise a target multi-window entry, and the target multi-window entry indicates a second application and a third application; and
displaying a multi-window interface in response to a first operation on the target multi-window entry, wherein the multi-window interface comprises a second interface of the second application and a third interface of the third application.

19. The method according to claim 18, wherein when a display region of the target multi-window entry comprises a first region, a second region, and a third region at different locations, the method further comprises:
displaying a first editing interface in a floating manner based on the second application in response to a second operation on the first region, wherein the first editing interface comprises a plurality of first options, and the plurality of first options indicate different interfaces of the second application and a fourth application; or
displaying a second editing interface in a floating manner based on the third application in response to a third operation on the second region, wherein the second editing interface comprises a plurality of second options, and the plurality of second options indicate different interfaces of the third application and a fifth application; or
displaying a third editing interface in a floating manner based on the second application and/or the third application in response to a fourth operation on the third region, wherein the third editing interface comprises a plurality of third options, and the plurality of third options indicate different interfaces of the second application and the third application.

20. The method according to claim 19, wherein the method further comprises:
selecting, in response to a fifth operation on an editing interface, a target interface indicated by one option on the editing interface; and
updating the target multi-window entry in response to a sixth operation of triggering exit of the editing interface, wherein an updated target multi-window entry indicates an application corresponding to the target interface.

21. The method according to claim 19 or 20, wherein the method further comprises:
in response to a seventh operation, performing any one of option deleting, option updating, option replacing, option viewing, option adding, option location moving, all-option expanding, option hiding, option display region enlarging, or option display region reducing on a plurality of options on the editing interface.

22. The method according to any one of claims 19 to 21, wherein the method further comprises:
skipping displaying the editing interface after no operation of a user is received after second duration.

23. The method according to any one of claims 19 to 22, wherein when the plurality of options on the editing interface comprise a first option and a second option, and a display priority of the first option is higher than a display priority of the second option, a display region of the first option is closer to a screen touch region for the user than a display region of the second option.

24. The method according to any one of claims 18 to 23, wherein after the displaying a multi-window interface, the method further comprises:
updating an interface of an application on the multi-window interface in response to an eighth operation; and
updating the target multi-window entry in response to a ninth operation of triggering exit of an updated multi-window interface, wherein an updated target multi-window entry indicates an application corresponding to the updated multi-window interface.

25. The method according to any one of claims 18 to 24, wherein the method further comprises:
deleting the target multi-window entry from the first interface of the first application in response to a tenth operation on the target multi-window entry.

26. The method according to any one of claims 18 to 25, wherein a display form of the multi-window entry comprises at least one of a control, a floating bubble, or a card.

27. The method according to any one of claims 18 to 26, wherein display content of the multi-window entry comprises at least one of an application interface photo, an application icon, an application name, or a preset pattern.

28. The method according to any one of claims 18 to 27, wherein a display manner of the multi-window interface is related to a display manner of the target multi-window entry and/or a presentation status of an electronic device.

29. The method according to claim 28, wherein the display manner of the multi-window interface is consistent with the display manner of the target multi-window entry.

30. The method according to any one of claims 18 to 29, wherein the first application comprises any application on a home screen, a leftmost screen, a control center, or a notification center.

31. An application multi-window presentation method, wherein the method comprises:
displaying application information of a second application on a first interface of a first application;
displaying one or more first multi-window entries in a floating manner in response to a first operation on the application information of the second application, wherein the one or more first multi-window entries comprise a target multi-window entry, and the target multi-window entry indicates a third interface of a third application; and
displaying a multi-window interface in response to a second operation on the target multi-window entry, wherein the multi-window interface comprises a second interface of the second application and the third interface of the third application.

32. The method according to claim 31, wherein after the displaying a multi-window interface, the method further comprises:
updating an interface of an application on the multi-window interface in response to a third operation; and
updating the target multi-window entry in response to a fourth operation of triggering exit of an updated multi-window interface, wherein an updated target multi-window entry indicates an application corresponding to the updated multi-window interface.

33. The method according to claim 31 or 32, wherein the method further comprises:
in response to a fifth operation, performing any one of entry deleting, entry updating, entry replacing, entry viewing, entry adding, entry location moving, all-entry expanding, entry hiding, entry display region enlarging, or entry display region reducing on the one or more multi-window entries.

34. The method according to any one of claims 31 to 33, wherein the method further comprises:
skipping displaying the one or more multi-window entries after no operation of a user is received after third duration.

35. The method according to any one of claims 31 to 34, wherein when a plurality of multi-window entries comprise a first entry and a second entry, and saving time of the first entry is earlier than saving time of the second entry, a display region of the first entry is closer to a screen touch region for the user than a display region of the second entry.

36. The method according to any one of claims 31 to 35, wherein display content of the multi-window entry comprises at least one of an application interface photo, an application icon, an application name, or a preset pattern.

37. The method according to any one of claims 31 to 36, wherein the first application comprises any application on a home screen, a leftmost screen, a control center, or a notification center.

38. An electronic device, comprising at least one memory and at least one processor, wherein
the memory is configured to store a computer-executable program or instructions; and
the processor is configured to invoke the computer-executable program or the instructions in the memory, for the electronic device to perform the method according to any one of claims 1 to 17, and/or for the electronic device to perform the method according to any one of claims 18 to 30, and/or for the electronic device to perform the method according to any one of claims 31 to 37.

39. A chip system, wherein the chip system is used in an electronic device comprising a memory, a display, and a sensor, the chip system comprises a processor, and when the processor executes a computer-executable program or instructions stored in the memory, the electronic device performs the method according to any one of claims 1 to 17, and/or the electronic device performs the method according to any one of claims 18 to 30, and/or the electronic device performs the method according to any one of claims 31 to 37.

40. A computer-readable storage medium, wherein the computer-readable storage medium stores a computer-executable program or instructions, and the computer-executable program or the instructions are set to perform the method according to any one of claims 1 to 17, and/or the computer-executable program or the instructions are set to perform the method according to any one of claims 18 to 30, and/or the computer-executable program or the instructions are set to perform the method according to any one of claims 31 to 37.
